# EUROPEAN PATENT SPECIFICATION

(11) **EP 3 498 493 B1**
(45) Date of publication and mention of the grant of the patent: **22.09.2021**
(21) Application number: 17841471.0
(22) Date of filing: 10.08.2017
(51) Int. Cl.: B60C 1/00, A01N 25/18, A01N 25/28, A01N 25/34, B60C 19/00, B60C 5/14

(54) **PNEUMATIC TIRE**
LUFTREIFEN
PNEUMATIQUE

(30) Priority: 15.08.2016 JP 2016159114; 08.09.2016 JP 2016175272
(43) Date of publication of application: 19.06.2019
(73) Proprietor: The Yokohama Rubber Co., Ltd., Minato-ku Tokyo 105-8685 (JP)
(72) Inventor: TANNO, Atsushi, Hiratsuka-shi Kanagawa 254-8601 (JP)
(74) Representative: Dilg, Haeusler, Schindelmann Patentanwaltsgesellschaft mbH
(86) International application number: PCT/JP2017/029173
(87) International publication number: WO 2018/034248

(56) References cited:
- EP-A1- 1 754 748
- JP-A- 2004 500 334
- JP-A- 2015 129 216
- JP-A- 2015 129 216
- JP-A- 2015 134 750
- JP-U- H0 659 278
- KR-A- 20070 021 546

## Description

### Technical Field

The present invention relates to a pneumatic tire, and more particularly relates to a pneumatic tire configured to enable suppression of the approach of insect pests (mosquitoes or the like) and small animals (cats or the like), and to enable suppression of the proliferation of mosquitoes and the like in water puddles that are formed inside tires.

### Background Art

As one form of insect damage to pneumatic tires and vehicles, it is known that mosquitoes reproduce in waste tires or the like, and that the tires become sources of mosquitoes (for example, see PTL 1). That is, since mosquitoes have an ecology of reproducing (egg laying, hatching, emerging) in water or nearby water, when a pneumatic tire is placed outdoors, and if rainwater or the like accumulates in the tire and a water puddle is formed, mosquito reproduction is carried out in this water puddle and the tire becomes a source of mosquitoes. In addition, since mosquito eggs are resistant to drying, even if the water puddle in the tire evaporates and dries after egg laying, it is possible for larvae (mosquito larvae) to hatch from the eggs once a water puddle is formed again in the tire. Further, if tires are transferred in a state in which mosquito eggs are adhered to the tire, there is a possibility that mosquitoes will proliferate at the transfer destination.

Among mosquitoes, particularly Aedes albopictus, Aedes aegypti, and anopheles are known to carry tropical diseases (infectious diseases such as dica virus infection, dengue fever, malaria, West Nile fever, yellow fever, and the like). In recent years, since the habitat areas of these mosquitoes are reported to be expanding due to global warming and other factors, there is a need to prevent pneumatic tires from becoming sources of mosquitoes. In addition, as described above, not only do pneumatic tires become a source of mosquitoes, but there is also a possibility of expanding the habitat areas of mosquitoes as a result of tire transfer. In consideration of the expansion of distribution networks in recent years, since there is a risk that pneumatic tires could contribute to the expansion of the infected areas of infectious diseases, there is a strong need for measures to prevent mosquito reproduction in tires. In addition to such reproduction problems, there is also a demand from consumers who want to avoid being bitten by mosquitoes when getting in and out of vehicles in summer when mosquitoes are prevalent.

Also, as one form of animal damage to pneumatic tires and vehicles, there is a known problem in which small animals such as cats, for example, enter the engine compartments or the like of vehicles (see PTL 2, for example). That is, especially in winter to avoid the cold, small animals such as cats may enter the gap between the engine compartment and the tire. In cases where the vehicle is started without realizing this, the small animals are injured or the vehicle is damaged, such that measures to prevent small animals such as cats from approaching vehicles are required.
PTL 3 discloses a sealant composition for repairing a puncture of a tire. It comprises an insecticide additive. Such a composition, when applied for its intended purpose, will cover the inner surface of the pneumatic tire to be repaired.
PTL 4 describes a fragrance-emitting rubber composition for tire treads or tire sidewalls, which contains, in addition to the conventional rubber composition for tire treads, a fragrance.
PTL 5 also shows a fragrant rubber composition for a tire sidewall.

### Citation List

Patent Literature
PTL 1: JP 2015-134750 A
PTL 2: JP 2016-140267 A
PTL 3: JP 2015 129216 A
PTL 4: EP 1 754 748 A1
PTL 5: KR 2007 0021546 A

### Summary of Invention

### Technical Problem

An object of the present invention is to provide a pneumatic tire configured to enable suppression of the approach of insect pests (mosquitoes, etc.) and small animals (cats, etc.), and to enable suppression of the reproduction of mosquitoes and the like in pools of water that are formed inside tires.

### Solution to Problem

In order to achieve the object described above, a first pneumatic tire includes a tread portion that extends in a tire circumferential direction and forms an annular shape; a pair of sidewall portions disposed on both sides of the tread portion; and a pair of bead portions disposed on an inner side in a tire radial direction of the sidewall portions, wherein an anti-insect layer having extermination characteristics or repellent characteristics with respect to insect pests is provided on an innermost surface of the pneumatic tire according to the combination of features of independent claim 1.

In order to achieve the object described above, a second pneumatic tire includes a tread portion that extends in a tire circumferential direction and forms an annular shape; a pair of sidewall portions disposed on both sides of the tread portion; and a pair of bead portions disposed on an inner side in a tire radial direction of the sidewall portions, wherein an anti-insect layer having extermination characteristics or repellent characteristics with respect to insect pests is provided at locations adjacent to a rubber layer or a resin layer constituting an innermost surface of the pneumatic tire according to the combination of features of independent claims 7 or 8.

In order to achieve the object described above, a third pneumatic tire includes a tread portion that extends in a tire circumferential direction and forms an annular shape; a pair of sidewall portions disposed on both sides of the tread portion; and a pair of bead portions disposed on an inner side in a tire radial direction of the sidewall portions, wherein a repellent layer having repellent characteristics or extermination characteristics with respect to insect pests or small animals is provided on an outer surface of the pneumatic tire according to the combination of features of independent claims 10, 11 or 12.

### Advantageous Effects of Invention

In a first pneumatic tire of the present invention, since an anti-insect layer is provided on the innermost surface of the tire, the anti-insect layer can exterminate or repel insect pests, and prevent tires from becoming a source of insect pests. In particular, in cases in which the insect pests are mosquitoes, even if a water puddle is formed in the tire, the extermination characteristics or repellent characteristics of the anti-insect layer with respect to insect pests are effective for the water puddle, and the reproduction of mosquitoes in water puddles formed in the tire can be suppressed. It should be noted that, in the present invention, insect pests primarily refer to insects that carry insect-borne infectious diseases (for example, infectious diseases such as dica virus infection, dengue fever, malaria, West Nile fever, yellow fever, and the like), and in particular, refer to mosquitoes such as Aedes albopictus, Aedes aegypti, anopheles and the like.

In a second pneumatic tire of the present invention, since the anti-insect layer is provided at a location adjacent to the layer constituting the innermost surface of the tire, the active ingredient of this anti-insect layer passes through the layer constituting the innermost surface, and is deposited on the inner surface side of the tire. As a result, similar to the first pneumatic tire described above, insect pests can be exterminated or repelled, and it is possible to prevent the tire from becoming a source of insect pests. In addition, in cases in which the insect pests are mosquitoes, even if a water puddle is formed in the tire, the extermination characteristics or repellent characteristics of the anti-insect layer with respect to insect pests are effective for the water puddle, and the reproduction of mosquitoes in water puddles formed in the tire can be suppressed.

In a third pneumatic tire of the present invention, since the repellent layer is provided on the outer surface of the tire, this repellent layer can repel or exterminate insect pests and small animals. In particular, when this tire is mounted to a vehicle, it is possible to prevent small animals (cats or the like) from entering the interior of the vehicle (for example, the engine compartment or the like). In addition, it is possible to prevent a person getting in and out of a vehicle from being bitten by insect pests (mosquitoes, for example). Further, in a state where the tire is not mounted on the vehicle (during storage or after disposal), in cases in which the insect pests are mosquitoes, for example, even if a water puddle is formed in the tire, mosquitoes can be prevented from approaching the water puddle by means of the repellent layer, the reproduction of mosquitoes in this water puddle can be suppressed, and the tire can be prevented from becoming a source of mosquitoes.

In the first pneumatic tire of the present invention, the anti-insect layer can be configured to be a layer formed from a chemical having extermination characteristics or repellent characteristics with respect to insect pests, coated on an inner surface of the pneumatic tire. Alternatively, the anti-insect layer can be configured to be a rubber layer or a resin layer disposed on an inner surface of the pneumatic tire, and a chemical having extermination characteristics or repellent characteristics with respect to insect pests can be mixed or blended with a rubber composition or resin constituting this layer. Alternatively, the anti-insect layer can be configured to be a mold release agent coated on an inner surface of the pneumatic tire, and a chemical having extermination characteristics or repellent characteristics with respect to insect pests can be mixed or blended in a compound constituting the mold release agent. Alternatively, the anti-insect layer can be configured to be an inner liner layer constituting an innermost layer of the pneumatic tire, and a chemical having extermination characteristics or repellent characteristics with respect to insect pests can be mixed or blended with a rubber composition or resin constituting the inner liner layer. According to these configurations, since extermination characteristics or repellent characteristics with respect to insect pests are imparted to the layer coated on the inner surface of the tire, the layer provided on the inner surface of the tire, or the inner liner layer as an anti-insect layer, the tire can be prevented from becoming a source of insect pests, and in particular, the reproduction of mosquitoes in water puddles that are formed in tires can be suppressed.

In a first pneumatic tire of the present invention, a configuration is also possible in which at least a portion of the anti-insect layer is covered with a water-soluble protective film. With this configuration, the anti-insect effect is exhibited for the first time in a situation in which the inside of the tire gets wet and a water puddle is formed inside the tire, hence, for preventing the occurrence of mosquitoes in particular, mosquito breeding can be effectively suppressed while suppressing loss of the chemical. In addition, particularly in cases in which the water-soluble protective film covers a portion of the anti-insect layer in a limited fashion, the timing when the anti-insect layer takes effect can be shifted between the portions covered with the water-soluble protective film and the other portions (the portion covered with the water-soluble protective film takes effect after the inside of the tire gets wet with rain), which is advantageous in that the insect repellent effect can be maintained over a long period of time.

In the case of using the above-mentioned chemical in the first pneumatic tire of the present invention, the chemical can also be configured to be encapsulated in water-soluble microcapsules. With this configuration, the anti-insect effect is exhibited for the first time in a situation in which the inside of the tire gets wet and a water puddle is formed inside the tire, hence, for preventing the occurrence of mosquitoes in particular, mosquito breeding can be effectively suppressed while suppressing loss of the chemical.

In the case of using the chemical described above with the first pneumatic tire of the present invention, the chemical can be configured to be encapsulated in pressure sensitive microcapsules. With this configuration, the anti-insect effect can be set to take effect after the tire is filled with air; that is, from when the tire is used to after it has been disposed of.

In the case of using the chemical described above with the first pneumatic tire of the present invention, the chemical can be configured to be water soluble and the anti-insect layer can be configured to be locally provided at the belt end portion on the inner surface of the tire. With this configuration, in the case that a water puddle is formed in the tire, the chemical dissolves in the water puddle, which is advantageous for exterminating insect pests (in particular, mosquito larvae).

In the case of using the chemical described above with the first pneumatic tire of the present invention, the chemical can be configured to be volatile, and the anti-insect layer can be configured to be locally provided in the bead region on the inner surface of the tire. This configuration is advantageous for repelling and exterminating insect pests (especially adult insects). That is, insect pests can be prevented from approaching tires and laying eggs in tires.

The second pneumatic tire of the present invention can be configured such that the anti-insect layer is an adhesive rubber layer layered between an inner liner layer and a carcass layer that constitute an innermost layer of the pneumatic tire, and a chemical having extermination characteristics or repellent characteristics with respect to insect pests is mixed or blended in a rubber composition constituting the adhesive rubber layer. With this configuration, since the adhesive rubber layer is provided with extermination characteristics or repellent characteristics with respect to insect pests to serve as an anti-insect layer, the tire can be prevented from becoming a source of insect pests, and in particular, the reproduction of mosquitoes in water puddles that are formed in the tire can be suppressed.

The second pneumatic tire of the present invention can be configured such that a protective layer is provided on an inner surface side of an inner liner layer, a rubber layer or a resin layer constituting the innermost surface of the pneumatic tire is the protective layer, the anti-insect layer is the inner liner layer, and a chemical having extermination characteristics or repellent characteristics with respect to insect pests is mixed or blended with a rubber composition or resin constituting the inner liner layer. With this configuration, since the inner liner layer is provided with extermination characteristics or repellent characteristics with respect to insect pests to serve as an anti-insect layer, the tire can be prevented from becoming a source of insect pests, and in particular, the reproduction of mosquitoes in water puddles that are formed in the tire can be suppressed.

In the case of using the chemical described above with the first or second pneumatic tire of the present invention, the chemical can be configured to include, as a main component, a pyrethroid insecticide, an organic phosphorus insecticide, DEET, icaridin, aroma oil (citronella, peppermint, geranium, lemon eucalyptus, or the like), wood vinegar powder, diflubenzuron, neonicotinoid, etofenprox, or a compound including copper.

The third pneumatic tire of the present invention can be configured such that the repellent layer is a tread rubber layer constituting the tread portion, and a chemical having repellent characteristics or extermination characteristics with respect to insect pests or small animals is blended in a rubber composition constituting the tread rubber layer. Alternatively, the third pneumatic tire of the present invention can be configured such that the repellent layer is a side rubber layer constituting the sidewall portions, and a chemical having repellent characteristics or extermination characteristics with respect to insect pests or small animals is blended in a rubber composition constituting the side rubber layer. Alternatively, the third pneumatic tire of the present invention can be configured such that the repellent layer is a bead rubber layer constituting the bead portions, and a chemical having repellent characteristics or extermination characteristics with respect to insect pests or small animals is blended in a rubber composition constituting the bead rubber layer.

The third pneumatic tire of the present invention can be configured such that the repellent layer is a layer formed from a chemical having repellent characteristics or extermination characteristics with respect to insect pests or small animals, coated on an outer surface of the sidewall portion. Alternatively, the third pneumatic tire of the present invention can be configured such that the repellent layer is a layer formed from a chemical having repellent characteristics or extermination characteristics with respect to insect pests or small animals, coated on a wall surface or a bottom surface of a groove provided in the tread portion.

In the case of using the chemical described above with the third pneumatic tire of the present invention, the chemical can be configured to include, as a main component, a pyrethroid insecticide, an organophosphorus insecticide, DEET, icaridin, aroma oil, wood vinegar powder, diflubenzuron, neonicotinoid, etofenprox, a compound including copper, or methyl salicylate, ethyl salicylate, cinnamic aldehyde, isotridecyl alcohol, limonene, a fragrance, an extract component of a natural herb, or animal urine.

### Brief Description of Drawings

- FIG. 1: is a meridian cross-sectional view illustrating a pneumatic tire according to an embodiment of a first aspect of the invention.
- FIG. 2: is a meridian cross-sectional view illustrating a pneumatic tire according to another embodiment of the first aspect of the invention.
- FIG. 3: is a meridian cross-sectional view illustrating a pneumatic tire according to another embodiment of the first aspect of the invention.
- FIG. 4: is an explanatory diagram illustrating an enlarged bead portion of a pneumatic tire to which the present invention can be applied.
- FIG. 5: is a meridian cross-sectional view illustrating a pneumatic tire according to another embodiment of the first aspect of the invention.
- FIG. 6: is a meridian cross-sectional view illustrating a pneumatic tire according to another embodiment of the first aspect of the invention.
- FIG. 7: is a schematic diagram illustrating an example of an anti-insect layer of the first aspect of the invention.
- FIG. 8: is a schematic diagram illustrating another example of an anti-insect layer of the first aspect of the invention.
- FIG. 9: is a schematic diagram illustrating another example of an anti-insect layer of the first aspect of the invention.
- FIG. 10: is a meridian cross-sectional view illustrating a pneumatic tire according to an embodiment of the third aspect of the invention.
- FIG. 11: is a meridian cross-sectional view illustrating a pneumatic tire according to another embodiment of the third aspect of the invention.
- FIG. 12: is a meridian cross-sectional view illustrating a pneumatic tire according to another embodiment of the third aspect of the invention.
- FIG. 13: is a meridian cross-sectional view illustrating a pneumatic tire according to another embodiment of the third aspect of the invention.
- FIG. 14: is a meridian cross-sectional view illustrating a pneumatic tire according to another embodiment of the third aspect of the invention.
- FIG. 15: is a meridian cross-sectional view illustrating a pneumatic tire according to another embodiment of the third aspect of the invention.

### Description of Embodiments

Hereinafter, the configuration of the first aspect of the invention will be described in detail with reference to the accompanying drawings.

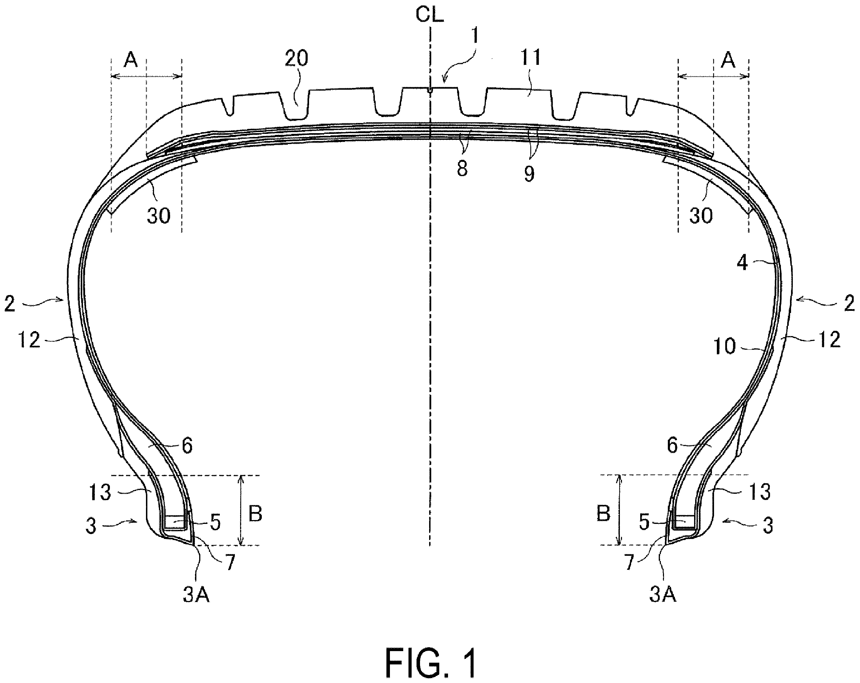

In FIG. 1 to FIG. 3, the reference sign CL denotes the tire equator. The pneumatic tire according to an embodiment of the present invention is formed from an annular tread portion 1 extending in the tire circumferential direction, a pair of sidewall portions 2 disposed on both sides of the tread portion 1, and a pair of bead portions 3 disposed inward of the sidewall portions 2 in the tire radial direction. It should be noted that the innermost surface of the tire in the present invention is the innermost side in the tire radial direction in the tread portion 1, is the innermost side in the tire width direction in the sidewall portions 2 and the bead portions 3, and is a surface located between the bead toe 3A of the left and right bead portions 3. In addition, the tire outer surface in the present invention is the outermost surface in the tire radial direction in the tread portion 1, is the outermost surface in the tire width direction in the sidewall portions 2 and the bead portions 3, and is a surface located between the bead toe 3A of the left and right bead portions 3.

A carcass layer 4 is mounted between the left-right pair of bead portions 3. The carcass layer 4 includes a plurality of reinforcing cords extending in the tire radial direction, and is folded back around a bead core 5 disposed in each of the bead portions 3 from a vehicle inner side to a vehicle outer side. Additionally, bead fillers 6 are disposed on the outer periphery of the bead cores 5, and each bead filler 6 is enveloped by a main body portion and a folded back portion of the carcass layer 4. Moreover, a chafer 7 is disposed on each bead portion 3 wrapping around the bead core 5. At least a portion of the chafer 7 is exposed on an inner surface of the tire. In contrast, a plurality (in the example of the drawings, two layers) of belt layers 8 are embedded on an outer circumferential side of the carcass layer 4 in the tread portion 1. These belt layers 8 each include a plurality of reinforcing cords that are inclined with respect to the tire circumferential direction, with the reinforcing cords disposed so as to cross each other between layers. In these belt layers 8, the inclination angle of the reinforcing cords with respect to the tire circumferential direction is set in the range from 10° to 40°, for example. In addition, a belt reinforcing layer 9 (in the example illustrated in the drawings, two layers of belt reinforcing layers 9 cover the entire width of the belt layers 8) is provided on the outer peripheral side of the belt layers 8. The belt reinforcing layer 9 includes, for example, organic fiber cords oriented in the tire circumferential direction. In the belt reinforcing layer 9, the angle of the organic fiber cords with respect to the tire circumferential direction is set, for example, to from 0° to 5°. An inner liner layer 10 is provided on the inner surface of the tire. The inner liner layer 10 is composed of a rubber composition primarily formed of a butyl rubber that has air permeation preventive performance, a resin (a thermoplastic resin or a thermoplastic elastomer composition in which an elastomer is dispersed in a thermoplastic resin) having air permeation preventive performance, or the like, and prevents the air filled in the tire from permeating to the outside of the tire.

A tread rubber layer 11 is disposed on the outer peripheral side of the carcass layer 4 in the tread portion 1, a side rubber layer 12 is disposed on the outer peripheral side (the outer side in the tire width direction) of the carcass layer 4 in the sidewall portions 2, and a bead rubber layer 13 (rim cushion rubber layer 13) is disposed on the outer peripheral side (the outer side in the tire width direction) of the carcass layer 4 in the bead portions 3. In addition, an adhesive rubber layer (not illustrated) can also be provided between the carcass layer 4 and the inner liner layer 10. It should be noted that the tread rubber layer 11 may have a structure in which two types of rubber layers (a cap tread rubber layer and an undertread rubber layer) having different physical properties are layered in the tire radial direction. The bead rubber layer 13 is a rubber layer that constitutes the bead portion 3 as described above, but includes at least a portion exposed on the outer surface of the tire.

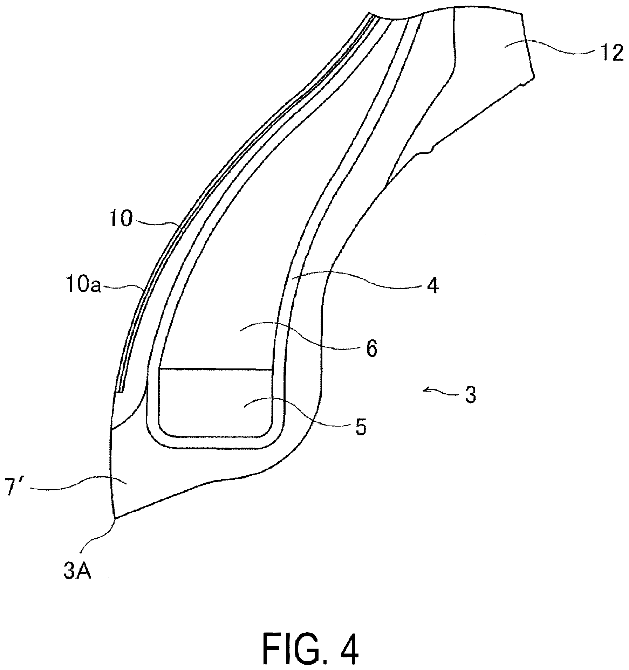

It should be noted that, in the case that the inner liner layer 10 is formed of a resin or the like having air permeation preventive performance as described above, as illustrated in an enlarged view in FIG. 4, a rubber chafer 7' that also functions as the bead rubber layer (the rim cushion rubber layer) may be provided so as to surround the outer peripheral side of the carcass layer 4 in the bead portions 3. In the aspect of FIG. 4, the sheet-shaped chafer 7 used in FIG. 1 to FIG. 3 is not provided, and the rubber chafer 7' is provided at the same location as the bead rubber layer 13 (the rim cushion rubber layer 13) of FIG. 1 to FIG. 3. In addition, in the case that the inner liner layer 10 is made of a resin or the like having air permeation preventive performance as described above, a protective rubber layer 10a can be further provided on the tire inner surface side of the inner liner layer 10.

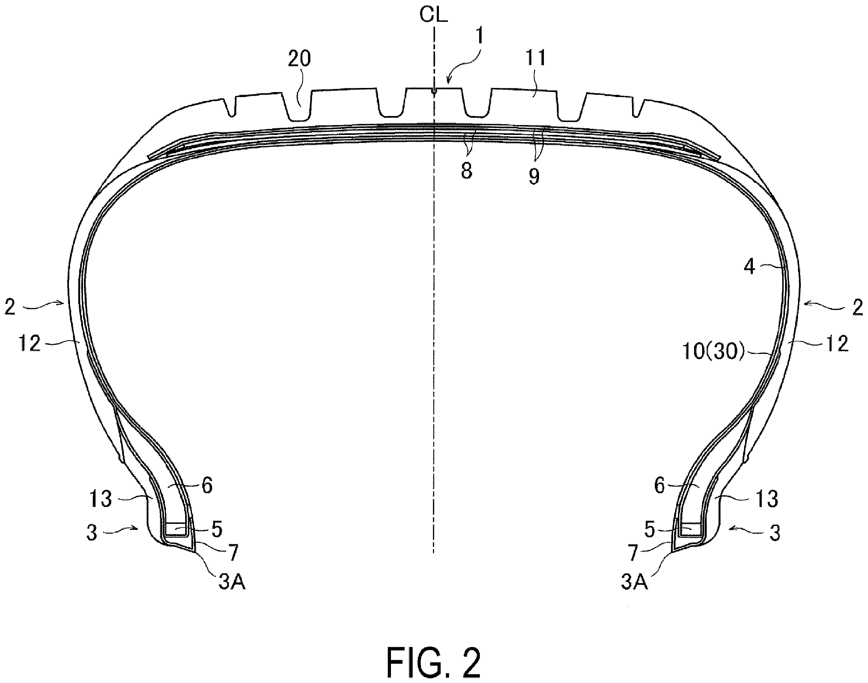

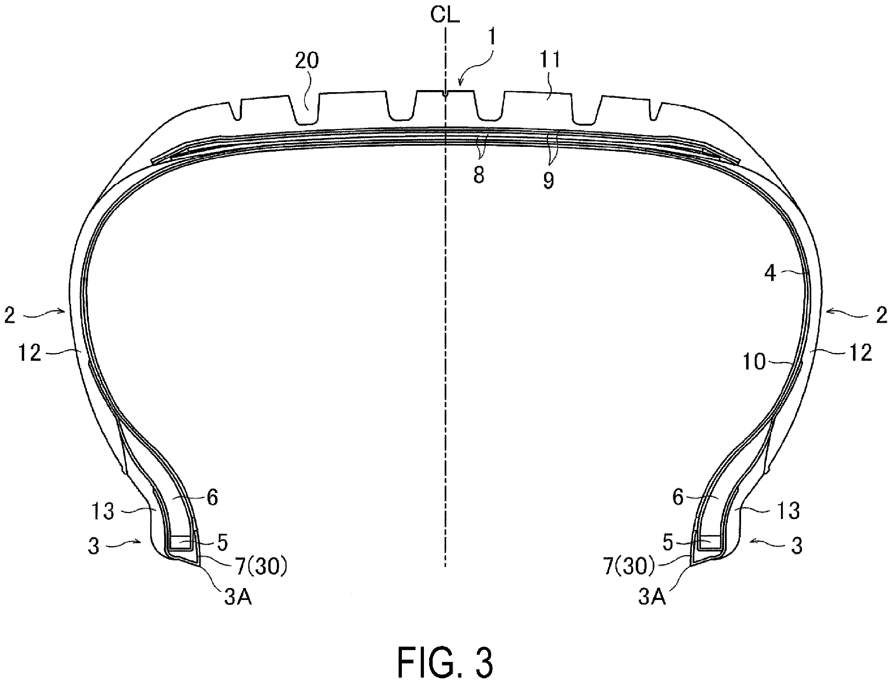

In the first aspect of the invention, an anti-insect layer 30 having extermination characteristics or repellent characteristics with respect to insect pests is provided on the tire innermost surface of a general pneumatic tire as will be described later. In the example of FIG. 1, the anti-insect layer 30 is provided as a new layer on the innermost surface of the general pneumatic tire described above. In the example of FIG. 2, the inner liner layer 10 that constitutes the innermost layer of the tire is provided with extermination characteristics or repellent characteristics with respect to insect pests according to a method to be described later, and the inner liner layer 10 also serves as the anti-insect layer 30. In the example of FIG. 3, at least a portion of the chafer 7 exposed on the inner surface of the tire is provided with extermination characteristics or repellent characteristics with respect to insect pests according to a method to be described later, and the chafer 7 also serves as the anti-insect layer 30. In the example of FIG. 4, at least a portion of the rubber chafer 7' exposed on the inner surface of the tire or the protective rubber layer 10a is provided with extermination characteristics or repellent characteristics with respect to insect pests according to a method to be described later, and these layers can be used as the anti-insect layer 30. In the first aspect of the invention, as long as the anti-insect layer 10 is provided on the innermost surface of the tire as described above, the basic cross-sectional structure of the pneumatic tire is not limited to the structure described above.

In the first aspect of the invention, a chemical having extermination characteristics or repellent characteristics with respect to insect pests (hereinafter simply referred to as a "chemical") is used in order to provide the extermination characteristics or repellent characteristics with respect to insect pests to the anti-insect layer 30. Specifically, methods can be used such as constituting the anti-insect layer 30 with the chemical, constituting the anti-insect layer 30 with a rubber composition or a resin for example, and mixing or blending the chemical in the rubber composition or the resin, or constituting the anti-insect layer 30 of fibers, and impregnating the fibers with the chemical. In any of these cases, if the anti-insect layer 30 (the chemical) is a solid, a method such as adhesion using an adhesive or the like is utilized, and if the anti-insect layer 30 (the chemical) is a liquid or a paste, the anti-insect layer 30 can be provided on the inner surface of the tire by using a coating method or the like.

The anti-insect layer 30 of the first aspect of the invention may be installed using the methods described above not only on a product tire (a vulcanized tire), for example, but also on the inner surface of a tire at an unvulcanized tire stage. For example, in cases where the anti-insect layer 30 is composed of a rubber layer or a resin layer as described above, by carrying out the regular vulcanization process with an unvulcanized anti-insect layer 30 placed on the innermost surface of an unvulcanized tire, it is possible to provide a vulcanization bonded anti-insect layer 30 on the innermost surface of the tire. Alternatively, a mold release agent may be coated on the inner surface of the tire (or the bladder surface) in the vulcanization process, and since this mold release agent remains on the vulcanized tire (even in cases where it is coated on the bladder surface, it transfers and remains), the anti-insect layer 30 may be provided by blending a chemical into the compound that constitutes the mold release agent. It should be noted that, in cases that the anti-insect layer 30 undergoes the vulcanization step as described above, it is necessary to prevent the efficacy of the chemical from being damaged by heat or pressure during vulcanization.

The chemical used in the first aspect of the invention may be any one which has extermination characteristics or repellent characteristics with respect to insect pests, and general commercially available insecticides and compounds used as the active ingredients in these insecticides can be utilized, for example. Specifically, a pyrethroid insecticide, an organic phosphorous insecticide, DEET, icaridin, aroma oil (citronella, peppermint, geranium, lemon eucalyptus, or the like), wood vinegar powder, diflubenzuron, neonicotinoid, etofenprox, or a compound including copper can be used. The type of the chemical may be appropriately selected according to the ecology of the insect pest that is targeted for extermination or repellent. For example, if the insect pest is an aquatic insect, a water soluble chemical may be used, and if the insect pest is a terrestrial insect or a flying insect, it may be preferable to use a volatile chemical. For example, in the case that mosquitoes, which will be described later, are targeted as insect pests, volatile chemicals are effective for flying adult insects, and water-soluble chemicals are effective for aquatic larvae (mosquito larvae) and eggs laid in water. Among the above-mentioned chemicals, pyrethroid insecticides, organic phosphorous insecticides, and DEET are volatile, and diflubenzuron, wood vinegar powder, and compounds including copper are water soluble. It should be noted that, with regard to compounds including copper, the compound itself does not have extermination characteristics or repellent characteristics with respect to insect pests, but copper ions produced when dissolved in water are effective against mosquitoes.

The above-mentioned chemicals are active ingredients that exhibit extermination characteristics or repellent characteristics with respect to insect pests, but depending on how the anti-insect layer 30 is provided, components other than these active ingredients may also be included. In particular, in cases where the anti-insect layer 30 also serves as a mold release agent, the following components (an inorganic component composed of a powder with a groove as a solvent, a silicone component, a surfactant component, or the like) may be included in order to achieve the effect of the mold release agent.

Specific examples of inorganic components include smectites such as montmorillonite, beidellite, nontronite, saponite, hectorite, sauconite, and stevensite; bentonite; vermiculites such as di-vermiculite and tri-vermiculite; kaolins such as halloysite, kaolinite, endelite, dickite, nacrite, and chrysotile; phyllosilicates such as talc, pyrophyllite, mica (muscovite, sericite), margarite, clintonite, muscovite, biotite, phlogopite, synthetic mica, fluoromica, paragolite, phlogopite, lepidolite, tetrasilicic mica, and teniolite; Jamon stones such as antigorite; chlorites such as donbassites, sudoite, cookite, clinochloa, chamosite, chlorite, and nanthite; piolite-palygorskites such as sepiolite and palygorskite; carbonates such as (heavy) calcium carbonate, magnesium carbonate, and barium carbonate; sulfates such as calcium sulfate and barium sulfate; metal oxides such as silica, alumina, magnesium oxide, antimony trioxide, titanium oxide, and iron oxide; metal hydroxides such as aluminum hydroxide, magnesium hydroxide and iron hydroxide; bengara, diatomaceous earth; aluminum silicate; carbon black, and graphite, for instance. One or more of these components may be used in combination.

Specific examples of silicone components include organopolysiloxanes, for example, dialkyl polysiloxanes such as dimethyl polysiloxane, diethyl polysiloxane, methyl isopropyl polysiloxane, and methyl dodecyl polysiloxane; alkyl phenyl polysiloxanes such as methyl phenyl polysiloxane, dimethylsiloxane-methylphenylsiloxane copolymers, and dimethylsiloxane-diphenylsiloxane copolymers; alkyl aralkyl polysiloxanes such as methyl (phenylethyl) polysiloxane and methyl (phenylpropyl) polysiloxane; and 3,3,3-trifluoropropylmethylpolysiloxane. One or more of these organopolysiloxanes may be used in combination. From the standpoint of releaseability, a silicone oil or the like that has a linear molecular structure, a low degree of polymerization, and low flowability at room temperature is preferable as the silicone component.

Specific examples of the surfactant component include a nonionic surfactant and an anionic surfactant. Examples of the nonionic surfactant include polyoxyalkylenes such as polyoxyethylene alkyl ether and polyoxypropylene alkyl ether, for example. Examples of the anionic surfactant include a carboxylic acid type anionic surfactant and a sulfonic acid type anionic surfactant, for example.

The water that serves as a solvent in the mold release agent is a solvent capable of uniformly dispersing inorganic components included in mold release agents for the inner surfaces of tires, and uniformly adhering to the inner surface of green tires mold release agents for the inner surfaces of tires. Depending on the type of the chemical, this water may function as a solvent for uniformly adhering to the inner surface of green tires mold release agents for the inner surface of tires. The water may include distilled water, ion-exchanged water, tap water, industrial water, or the like. In addition, various types of known additives can be blended in the mold release agent for the inner surface of the tire of the present invention.

The blending amount of the inorganic component is not particularly limited, but is, for example, from 15 to 90 mass% with respect to the total amount of the inorganic component, the silicone component, and the surfactant. The blending amount of the silicone component is not particularly limited, but is, for example, from 5 to 75 mass% with respect to total amount of the inorganic component, the silicone component, and the surfactant. The blending amount of the surfactant is not particularly limited, but is, for example, from 1 to 10 mass% with respect to the total amount of the inorganic component, the silicone component, and the surfactant.

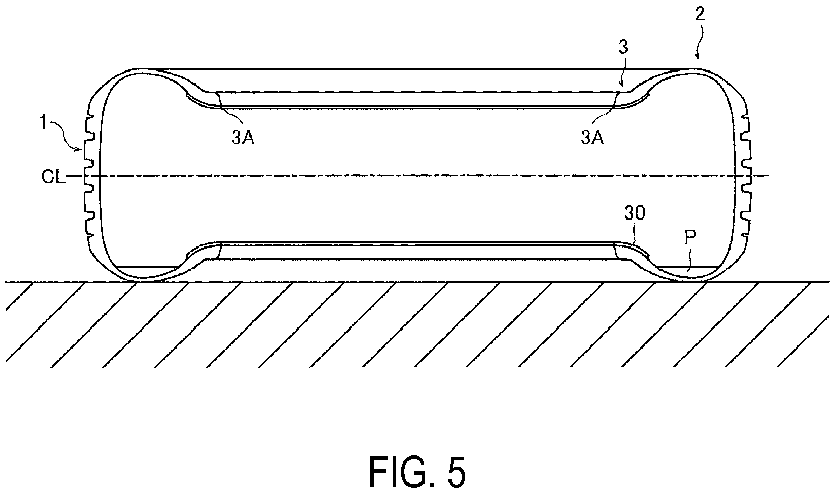

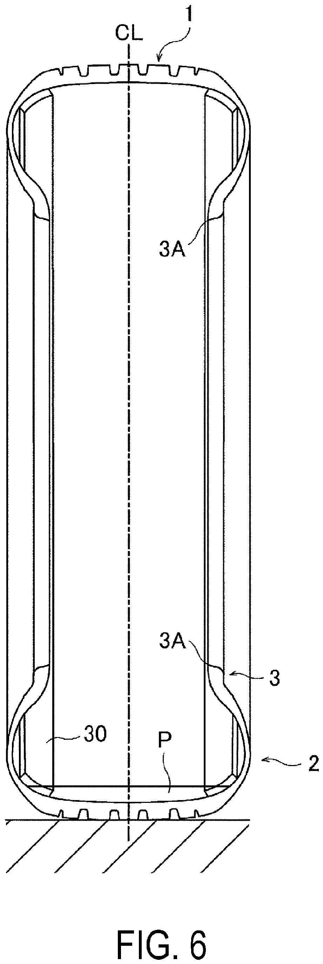

Here, with respect to the first aspect of the invention, the process in which insect pests reproduce in tires will be described using mosquitoes as an example of an insect pest that can use pneumatic tires as a source. A pneumatic tire having a general structure as described above is placed outdoors, for example, in a state as illustrated in FIG. 5 and FIG. 6. That is, FIG. 5 illustrates a state in which the tire is placed horizontally such that the sidewall portions 2 contact the ground, and FIG. 6 illustrates a state in which the tire is placed vertically such that the tread portion 1 contacts the ground. In such a state, rainwater and the like accumulates in the tire due to rainfall or the like, and a water puddle P is formed. As mosquitoes lay eggs at the edge of water and on the surface of water, when a water puddle P is formed in the tire as described above, mosquitoes lay eggs in the tire (water puddle P). Then, the eggs that are laid hatch into larvae (mosquito larvae) in the water puddle P. Subsequently, the larvae (mosquito larvae) transform into pupae in the water puddle P, and then emerge into adults.

With respect to the process of mosquito reproduction described above, in the case that the chemical of the first aspect of the invention is volatile, since the active ingredient (chemical) of the anti-insect layer 30 is volatile in the vicinity of the tire, the approach of mosquitoes to the water puddle P to lay eggs can be suppressed (repelled), mosquitoes that approached the water puddle P to lay eggs can be exterminated, and alternatively, immediately emerged adults can be exterminated in the vicinity of the water puddle P. In addition, in the case that the chemical of the first aspect of the invention is water soluble, since the active ingredient (chemical) of the anti-insect layer 30 dissolves in the water puddle P formed in the tire, mosquitoes can be exterminated at the egg or larval stages in the water puddle P. In this way, the anti-insect layer 30 of the first aspect of the invention can suppress the reproduction of insect pests (especially mosquitoes).

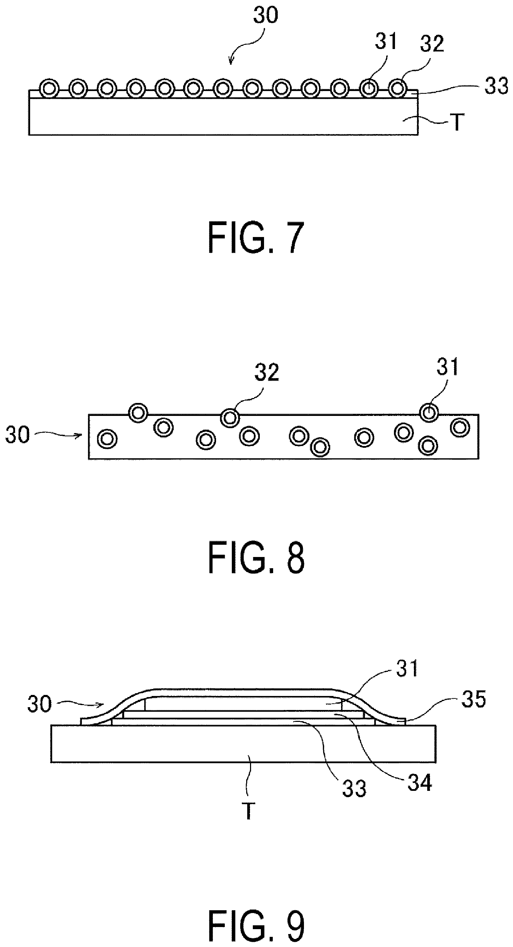

As described above, since a water puddle P formed in the tire constitutes a reproductive condition of mosquitoes, in the first aspect of the invention, the anti-insect layer 30 (the chemical) may be configured to take effect when the water puddle is formed; that is, when the inner surface of the tire gets wet. For example, as illustrated in FIG. 7, the active ingredient 31 (the chemical) may be configured to be encapsulated in a water-soluble microcapsule 32. In the illustrated example, a water-soluble microcapsule 32 in which the active ingredient 31 (the chemical) is encapsulated is provided on the inner surface of the tire T via the adhesive layer 33. With this configuration, the chemical is exposed when the inner surface of the tire gets wet and the water-soluble microcapsule melts, and the chemical vaporizes or dissolves and takes effect against the mosquitoes. It should be noted that, as illustrated in FIG. 8, the water-soluble microcapsules in which the chemical is encapsulated may further be mixed or blended in the rubber layer or the resin layer (the anti-insect layer 30, the inner liner layer 10 that also serves as the anti-insect layer 30, the chafer 7, the rubber chafer 7', and the protective rubber layer 10a), but in this case, the rubber layer and the resin layer themselves should also be made to have a low water solubility such that the water-soluble microcapsules are gradually exposed when the inner surface of the tire gets wet.

Alternatively, as illustrated in FIG. 9, the anti-insect layer 30 itself can be configured to be protected with a water-soluble protective material. In particular in the example of FIG. 9, the anti-insect layer 30 is configured by adhering the active ingredient 31 (the chemical) placed on the base material 34 (the thin paper) to the inner surface of the tire T via the adhesive layer 33, and a water-soluble film 35 is provided on this anti-insect layer 30. With this configuration, the anti-insect layer 30 (the active ingredient 31) is exposed due to the inner surface of the tire getting wet and the water-soluble film 35 melting, and the anti-insect layer 31 (the chemical) vaporizes or dissolves and takes effect against the mosquitoes. It should be noted that, in the case that the inner liner layer 10 also serves as the anti-insect layer 30 as illustrated in FIG. 2, the water-soluble film 35 may be provided on the inner liner layer 10. Similarly, in the case that the chafer 7 also serves as the anti-insect layer 30 as illustrated in FIG. 3, and the case that the rubber chafer 7' and the protective rubber layer also serve as the anti-insect layer as in the aspect illustrated in FIG. 4, the water-soluble film 35 may be provided on the layer functioning as the anti-insect layer 30.

As described above, in the case of using a water-soluble film in the first aspect of the invention, by covering only a portion of the anti-insect layer 30 with the water-soluble film, the period during which the anti-insect layer 30 is effective can be prolonged. That is, depending on the presence or absence of the water-soluble film, since the timing at which the effect of the anti-insect layer 30 manifests varies, even if all of the chemicals contained in the regions not protected by the water-soluble film vaporize, the chemical included in the region protected by the water-soluble film remains, and since the chemicals contained in the regions protected by the water-soluble film take effect after the inner surface of the tire gets wet, the period during which the anti-insect layer 30 is effective can be prolonged.

As examples of the materials that constitute the water-soluble microcapsules and the water-soluble film of the first aspect of the invention, PVOH or a water-soluble acrylic resin (polyacrylic acid, sodium polyacrylate, acrylic acid/maleic acid copolymer salts, acrylic acid/sulfonic acid type monomer copolymer salts) can be used, for example. When water-soluble microcapsules or a water-soluble film are placed prior to vulcanization, it is preferable to use an acrylic resin having sufficient heat resistance against vulcanization temperatures (approximately 200°C).

In cases that a water-soluble protective material is used as described above, or cases that the chemical itself is water soluble, it is preferable to provide water solubility with respect to water having a pH of less than or equal to 6, and more preferably a pH of from 5.8 to 3.0. In this way, the protective materials and the chemicals become soluble in low pH water such as rain water (acid rain) without dissolving in tap water or industrial water (having a pH of from approximately 6 to 8). As such, it is possible to prevent the chemical from being accidentally melted during the production process of the tire, for example, so that the anti-insect effect can be reliably exhibited when the water puddle P is formed by rainwater.

In the example described above, although attention was focused on the formation of a water puddle P as a reproduction condition for mosquitoes, as the majority of tires that become a source of mosquitoes are used tires that are left outdoors, rather than unused tires, the anti-insect layer 30 may be configured to exhibit its effect due to use of the tire. For example, the chemical may be encapsulated in pressure sensitive microcapsules which break at approximately the air pressure filled in a tire (atmospheric pressure + approximately 50 to 100 kPa), and the tire may be filled with air such that the pressure sensitive microcapsules break (the active ingredient (the chemical) is exposed) and the anti-insect layer 30 functions. In this case as well, since the chemical is encapsulated in the microcapsules, the basic structure of FIG. 7 and FIG. 8 can be utilized. It should be noted that, in this case, the chemical does not continue to vaporize from the use of the tire, but the chemical saturates the narrow space formed by the tire and the rim, and the vaporization of the chemical ceases while the tire is in use. Subsequently, after disposal, that is, when the tire is removed from the wheel, the vaporization will resume.

Of course, the anti-insect layer 30 may be configured to take effect from the time of manufacture, without the conditions described above. In this case, in consideration of the impact on the body of a manufacture worker, it is preferable to adjust the kind and the amount of the chemical.

The location where the anti-insect layer 30 of the first aspect of the invention is provided includes a preferable region in accordance with the properties of the anti-insect layer 30 (the chemical). That is, when the anti-insect layer 30 (the chemical) is water soluble, it is preferable that the anti-insect layer 30 reliably contacts the water puddle P when the water puddle P is formed. Conversely, in the case that the anti-insect layer 30 (the chemical) is volatile, if the anti-insect layer 30 is submerged in the water puddle P, there is a possibility that the active ingredient may not be sufficiently volatized. Based on this, in the case that the anti-insect layer 30 (the chemical) is water soluble, it is preferable that the anti-insect layer 30 be provided at least in the belt end portion (the region A in FIG. 1) ± 40 mm from the belt end location in the tire width direction. Since this belt end portion is a region that overlaps at least a part of the water puddle illustrated in FIG. 6, for example, regardless of how the tire is placed, the effect of the anti-insect layer 30 can be reliably exhibited with respect to the water puddle. It should be noted that, in large tires that are often stored in upright, leaning positions, (a state in which the tread portion 1 contacts the ground), even if the anti-insect layer 30 is provided at a location that overlaps with the tire equator CL instead of the belt end portion as described above, the effect of the anti-insect layer 30 can be reliably exhibited with respect to the water puddle.

In contrast, in cases that the anti-insect layer 30 (the chemical) is volatile, it is preferable to provide the anti-insect layer 30 at least in the bead region (the region B in FIG. 1) 50 mm from the bead toe location in the tire radial direction. Since this bead region is a region in which at least a portion thereof is likely to be exposed from the water puddle as illustrated in FIG. 5, for example, regardless of how the tire is placed, the vaporization of the chemical is not inhibited by the water puddle. In addition, although this bead region is difficult to submerge in the water puddle, since it is likely to get wet from rain water when it rains, in the case of using the water-soluble protective material described above, there are advantages that the protective material can be reliably melted, and the vaporization of the active ingredient (the chemical) of the exposed anti-insect layer 30 is not impaired. It should be noted that, in the case that the chafer 7 also serves as the anti-insect layer 30 as illustrated in FIG. 3, and the case that the rubber chafer 7' is used as the anti-insect layer 30 in the aspect illustrated in FIG. 4, since the location where the chafer 7 and the rubber chafer 7' are exposed on the inner surface of the tire is included in the bead region (the region B in FIG. 1) described above, the above-described advantages can be obtained. In addition, in the case that the chafer 7 and the rubber chafer 7' also serve as the anti-insect layer 30, since the area exposed to the inner surface of the tire is smaller than the total amount of the chafer 7 and the rubber chafer 7', there is also an advantage that the chemical is gradually released from a narrow area, and the duration of the effect of the anti-insect layer 30 can be prolonged.

Of course, the anti-insect layer 30 may be provided so as to cover the entire surface of the innermost surface of the tire without providing the anti-insect layer 30 on a portion of the inner surface of the tire in a limited fashion as described above. In particular, in the case that the inner liner layer 10 also serves as the anti-insect layer 30 as in FIG. 2, and in the case that the protective rubber layer 10a is used as the anti-insect layer 30 as in the aspect illustrated in FIG. 4, the anti-insect layer 30 inevitably covers the entire surface of the tire. In this way, if the anti-insect layer 30 covers the entire inner surface of the tire, since at least a portion of the anti-insect layer 30 is reliably submerged and the other portions are reliably exposed from the water puddle regardless of how the tire is placed, an excellent effect can be achieved regardless of whether the anti-insect layer 30 (the chemical) is volatile or water soluble.

The anti-insect layer 30 disposed at the location described above may continuously extend over the entire circumference of the inner surface of the tire, or may intermittently extend at a predetermined interval. In the latter case, the anti-insect layer 30 is constituted by a plurality of elements. Each element may be a chemical itself such as the anti-insect layer 30 mentioned above, or a rubber or resin mixed or blended with the chemical, and cases in which these elements are disposed at predetermined intervals in the tire circumferential direction are also included.

In the case that the anti-insect layer 30 is disposed at a specific location as described above, it is preferable that the inner surface of the tire on which the anti-insect layer 30 is to be disposed be made smooth in order to improve the adhesiveness of the anti-insect layer 30. In order to make the inner surface of the tire smooth, it is conceivable for vent grooves to not be installed in this region on the vulcanization bladder, or for the region on the inner surface of the tire to be buffed.

Since the location of the anti-insect layer 30 and the manner in which the tire is placed influence the anti-insect performance as described above, the direction and angle of tire placement may be displayed on the side of the tire or the like to prompt users to place the tire in the proper way.

It should be noted that, although cases of exterminating and repelling mosquitoes are primarily exemplified in the description of the first aspect of the invention described above, any insect pest that can use tires as a source can be exterminated and repelled by the anti-insect layer 30 of the present invention. In cases that other insect pests are targeted, it is preferable to set the conditions under which the anti-insect layer 30 functions according to the ecology of the insect pest.

Next, the second aspect of the invention will be described. It should be noted that, in the second aspect of the invention, the same anti-insect layer 30 as in the first aspect of the invention is disposed at a location different from that of the first aspect of the invention, and although the method of operation (in particular, the route through which the chemical is released) of the anti-insect layer 30 differs slightly, the basic configuration of the invention is similar. Accordingly, the differences between the arrangement of the anti-insect layer and the operation thereof will be described with respect to the second aspect of the invention, and a detailed description of the other parts (aspects shared with the first aspect of the invention) will be omitted.

In the second aspect of the invention, the anti-insect layer 30 is arranged at a location adjacent to the rubber layer or the resin layer (the inner liner layer 10) that constitutes the innermost surface of the tire. In particular, by providing extermination characteristics or repellent characteristics with respect to insect pests to an adhesive rubber layer (not illustrated) layered between the inner liner layer 10 and the carcass layer 4 in the same manner as in the first aspect of the invention, the adhesive rubber layer can also be made to serve as the anti-insect layer 30. When the second aspect of the invention is configured as such, although the anti-insect layer 30 is not directly exposed to the inner surface of the tire, since the active ingredient (for example, the chemical) of the anti-insect layer 30 passes through the layer (the inner liner layer 10) that constitutes the innermost surface of the tire and is deposited on the inner surface of the tire, the active ingredient (for example, the chemical) can be released. As a result, similar to the first aspect of the invention, the tire can be prevented from becoming a source of insect pests, and in particular, the reproduction of mosquitoes in water puddles that are formed in the tire can be suppressed. In addition, since it is more difficult for the active ingredient (the chemical) of the anti-insect layer 30 to be released in comparison with the first aspect of the invention, in contrast, there is an advantage that the duration of the effect can be prolonged.

It should be noted that in a case that a tire that uses an inner liner layer 10 constituted by resin or the like (a thermoplastic resin or a thermoplastic elastomer composition in which an elastomer is dispersed in a thermoplastic resin) and in which a protective rubber layer 10a is disposed further toward the inner surface side of the inner liner layer 10 is placed as illustrated in FIG. 4, the inner liner layer 10 is the layer disposed at a location adjacent to the layer (the protective rubber layer 10a) that constitutes the innermost surface of the tire. Accordingly, in this embodiment, when the inner liner layer 10 is used as the anti-insect layer 30, since the active ingredient (for example, the chemical) included in the anti-insect layer 30 (the inner liner layer 10) passes through the protective rubber layer 10a that constitutes the innermost surface of the tire and is deposited on the inner surface of the tire, the effect described above can be achieved.

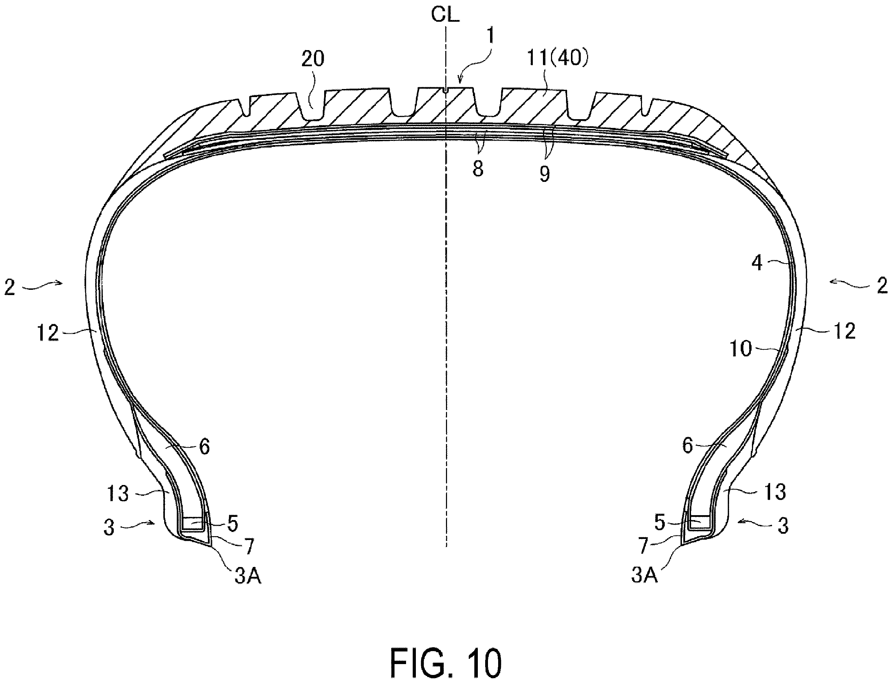

Next, the configuration of the third aspect of the invention will be described in detail with reference to the accompanying drawings. FIG. 10 to FIG. 15 illustrate a pneumatic tire according to the third aspect of the invention. In FIG. 10 to FIG. 15, components identical to those illustrated in FIG. 1 to FIG. 3 are denoted by the same reference signs, and a detailed description of those components is omitted.

In the third aspect of the invention, since a repellent layer 40 having repellent characteristics or extermination characteristics with respect to insect pests or small animals is provided on an outer surface of a general pneumatic tire as described below, the basic cross sectional structure of the pneumatic tire is not limited to the above-described structure.

In order to provide repellent characteristics or extermination characteristics with respect to insect pests to the repellent layer 40 of the third aspect of the invention, a chemical having repellent characteristics or extermination characteristics with respect to insect pests (hereinafter, simply referred to as "the chemical") is used, for example. Specifically, the repellent layer 40 itself may be constituted by the chemical, or the repellent layer 40 may be composed of a rubber composition or a resin, for example, and the chemical may be mixed or blended in the rubber composition or resin. In the former case, if the repellent layer 40 (the chemical) is a solid, a method such as adhesion using an adhesive or the like is utilized, and if the repellent layer 40 (the chemical) is a liquid or a paste, the repellent layer 40 can be provided on the outer surface of the tire by using a coating method or the like. In the latter case, when a rubber composition that constitutes each rubber layer (the tread rubber layer 11, the side rubber layer 12, and the bead rubber layer 13) of the pneumatic tire and a resin layer (for example, a coating layer or the like) on the outer surface of the tire are included, by blending the chemical into at least a portion of the resin constituting the resin layer on the outer surface side of the tire, each of these layers (the tread rubber layer 11, the side rubber layer 12, the bead rubber layer 13, and the resin layer) can be made to function as the repellent layer 40, and each of these layers (the tread rubber layer 11, the side rubber layer 12, the bead rubber layer 13, and the resin layer) can be provided on the outer surface of the tire as the repellent layer 40 (as layers also serving as the repellent layer 40).

In the case that the repellent layer 40 of the third aspect of the invention is formed by coating the chemical, the repellent layer 40 may be coated on a product tire (a vulcanized tire), but it may also be coated at an unvulcanized tire stage. In the case that the rubber layer constituting each portion of the pneumatic tire also serves as the repellent layer 40, in the stage of forming the rubber composition that constitutes each rubber layer, the chemical can be blended as a component of the rubber composition, or the chemical can be mixed in a state where each rubber layer is unvulcanized. In the case that the repellent layer 40 undergoes a vulcanization step, it is necessary to prevent the efficacy of the chemical from being impaired by heat or pressure during vulcanization.

It is sufficient for the chemical of the third aspect of the invention to have repellent characteristics or extermination characteristics with respect to insect pests and small animals, but it is preferable for it to be volatile in order to effectively prevent the approach of pests to the tire vicinity. In the case that a volatile chemical is used, in a state in which the chemical is volatile and the active ingredient drifts in the outside air around the tire, insect pests and small animals cannot approach the tire (and vehicles equipped with the tires), and even supposing that insect pests or small animals were to approach, they would be exterminated. General commercially available insecticides and repellents against small animals, or the compounds used as the active ingredients in these insecticides and repellents can be utilized as the chemical, for example. Specifically, a pyrethroid insecticide, an organic phosphorous insecticide, DEET, or a compound including copper can be used as the chemical for insect pests. It should be noted that, with regard to compounds including copper, the compound itself does not have extermination characteristics or repellent characteristics with respect to insect pests, but copper ions produced when dissolved in water are effective against mosquitoes. A compound which emits a smell disliked by small animals can be used as the chemical for small animals, for example. That is, methyl salicylate, ethyl salicylate, cinnamic aldehyde, isotridecyl alcohol, limonene, a fragrance (citronella, lemon, wood vinegar, pepper oil, wasabi or the like), an extract component of a natural herb (lantana, eucalyptus, geranium, henruda, rosemary, lemon grass, citrus, peppermint, onion, garlic, chives, marigold, a canina hybrid, or the like), animal urine (especially wolf), or a chemical including a blended combination of these can be used. The type of the chemical may be appropriately selected according to the ecology and the characteristics of the insect pest or the small animal to be repelled or exterminated.

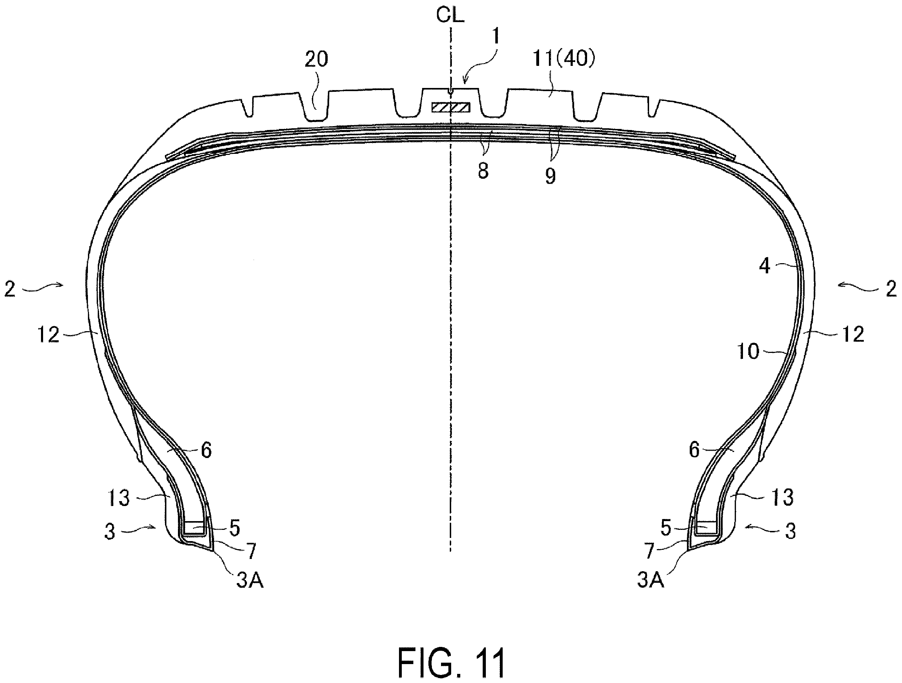

The location at which the repellent layer 40 of the third aspect of the invention is provided is not particularly limited, and it can be provided appropriately at the locations illustrated in FIG. 10 to FIG. 15, for example. In the example of FIG. 10, the chemical is blended in the rubber composition that constitutes the tread portion 1 (the tread rubber layer 11), and the tread rubber layer 11 also serves as the repellent layer 40. In this case, since the surface of the tread portion 1 that contacts the ground gradually wears during driving, the chemicals in the rubber composition are successively exposed on the surface, which is advantageous for maintaining the effect. At this time, in order to sufficiently achieve the effect of the repellent layer 40, it is preferable to blend from 0.001 to 5 parts by weight of the chemical with respect to 100 parts by weight of the rubber component in the rubber composition that constitutes the tread rubber layer 11. With regard to the rubber composition other than the chemical, the tread rubber layer 11 can be made to have a general formulation. It should be noted that, in the case that the tread rubber layer 11 is composed of two layers including a cap tread rubber layer and an undertread rubber layer layered in the tire radial direction, it is preferable to blend a chemical in the cap tread rubber layer 11 on the outer surface side of the tire, such that the cap tread rubber layer 11 also serves as the repellent layer 40. In addition, it is unnecessary to form the entire tread rubber layer 11 from a rubber composition that includes the chemical. For example, as illustrated in FIG. 11, a rubber portion (the hatched portion in the drawing) including the chemical may be present on a portion of the tread rubber layer 11 (the repellent layer 40). In this case, if the portion including the chemical is exposed on the surface, it will be effective from when it is brand new, but even if the portion containing the chemical is embedded as illustrated in FIG. 10, as the surface layer of the tread portion 1 wears during driving, this portion is exposed and the chemical takes effect. It should be noted that in the case that the chemical is mixed or blended throughout the entire tread rubber layer 11, the chemical need not be uniformly dispersed throughout the tread rubber layer 11, but a portion which does not include the chemical may be present on the surface layer of the tread portion 1, for example. In this case as well, the surface layer of the tread portion 1 wears during driving such that the portion including the chemical is exposed and the chemical takes effect.

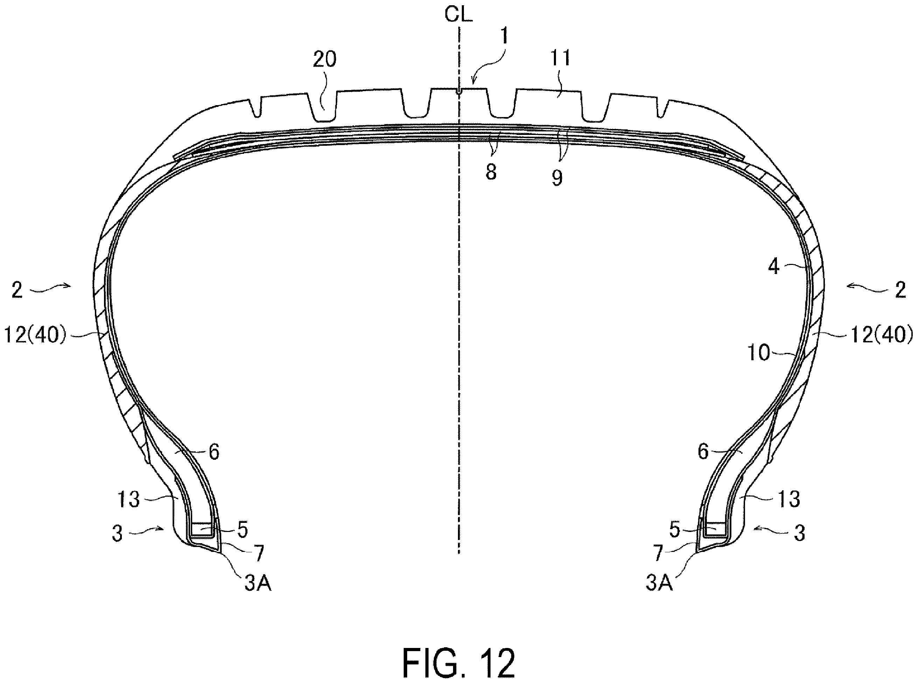

In the example of FIG. 12, the chemical is blended in the rubber composition that constitutes the sidewall portion 2 (the side rubber layer 12), and the side rubber layer 12 also serves as the repellent layer 40. In this case, wear does not occur as in the tread portion 1, but since components in the rubber composition are sequentially deposited (what is known as "blooming" occurs) on the surface, the effect of the chemical can be sustained by this bloom. At this time, in order to effectively produce blooming, it is preferable to blend from 0.001 to 10 parts by weight of the chemical with respect to 100 parts by weight of the rubber component in the rubber composition that constitutes the side rubber layer 12. With regard to the rubber composition other than the chemical, the side rubber layer 12 can be made to have a general formulation. In this case as well, the entire side rubber layer 12 need not be constituted by a rubber composition including the chemical, but a rubber composition including the chemical may be embedded in a portion of the sidewall portion 2 (the side rubber layer 12).

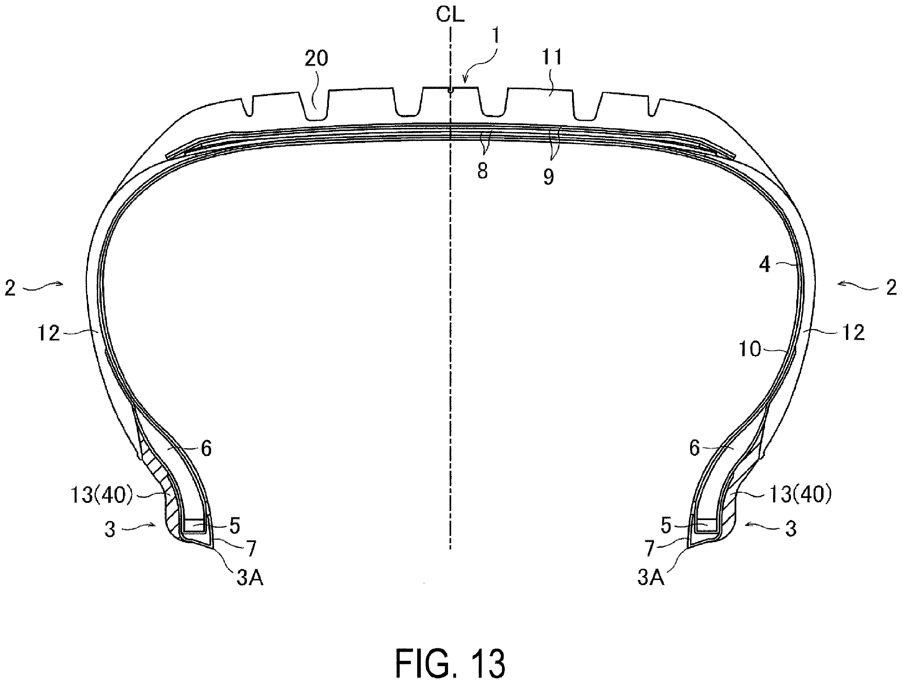

In the example of FIG. 13, the chemical is blended in the rubber composition that constitutes the bead portion 3 (the bead rubber layer 13), and the bead rubber layer 13 also serves as the repellent layer 40. In this case, in a state in which the rim is assembled and the tire is in use, the bead portion 3 is in contact with the rim flange, and since the repellent layer 40 is not exposed, the effect of the active ingredient (the chemical) is limited. However, after being removed from the wheel after use, the bead rubber layer 13 (the repellent layer 40) is exposed and the chemical takes effect by vaporizing the active ingredient (the chemical) for example. Accordingly, this configuration can be suitably utilized for repelling or exterminating insect pests with respect to waste tires (water puddles formed in waste tires). At this time, it is preferable to blend from 0.001 to 10 parts by weight of the chemical with respect to 100 parts by weight of the rubber component in the rubber composition that constitutes the bead rubber layer 13. With regard to the rubber composition other than the chemical, the bead rubber layer 13 can be made to have a general formulation. In this case as well, the entire bead rubber layer 13 need not be constituted by a rubber composition including the chemical, but a rubber composition including the chemical may be embedded in a portion of the bead portion 3 (the bead rubber layer 13).

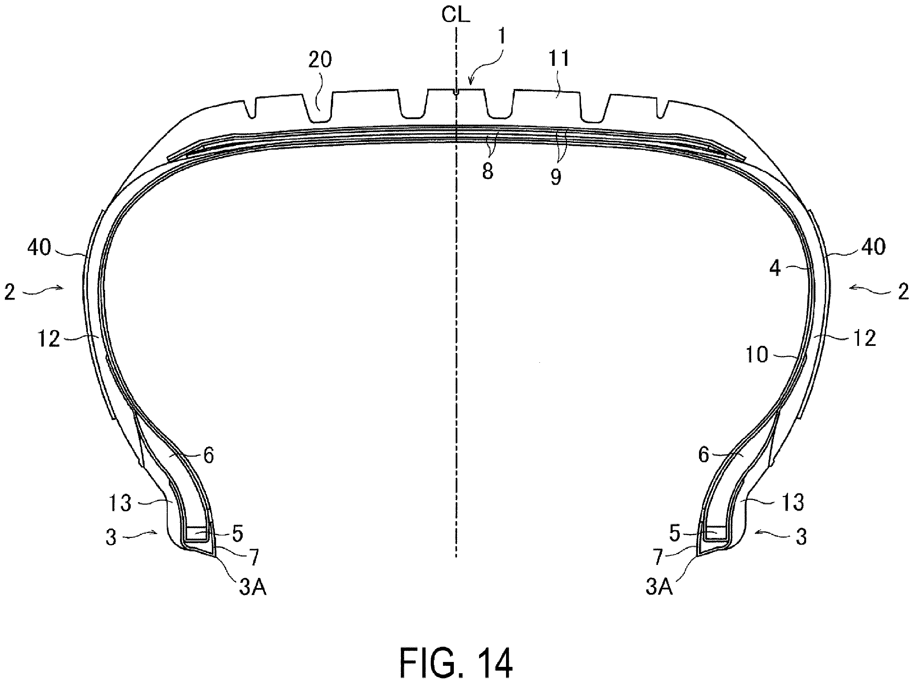

In the example of FIG. 14, the repellent layer 40 is configured by coating a chemical on the outer surface of the sidewall portion 2. In this case, instead of only coating the chemical, the chemical may be blended in a coating agent that is coated on the outer surface of the tire for a variety of purposes, and a coating agent including the chemical may be coated. That is, a coating layer that covers the outer surface of the tire for another purpose may also serve as the repellent layer 40. In order to prevent peeling of the coated chemical (the coating agent), it is preferable not to blend an anti-aging agent with the rubber composition that constitutes the side rubber layer 12, or to use a rubber composition including less than or equal to 2 parts by weight of an anti-aging agent. In this case, it is unnecessary to coat the repellent layer 40 on the entire outer surface of the sidewall portion 2, and the repellent layer 40 may be coated on only a portion of the outer surface of the sidewall portion 2. In addition, in the case that the coating layer also serves as the repellent layer 40, a coating layer (the coating layer that also serves as the repellent layer 40) in which the chemical is blended may be applied to a portion of the sidewall portion 2 while a normal coating layer that does not include the chemical may be coated on other portions. In the case that the coating layer also serves as the repellent layer 40, if a glossy finish is provided on the coating layer, the repellent effect against small animals (cats), in particular, can be increased.

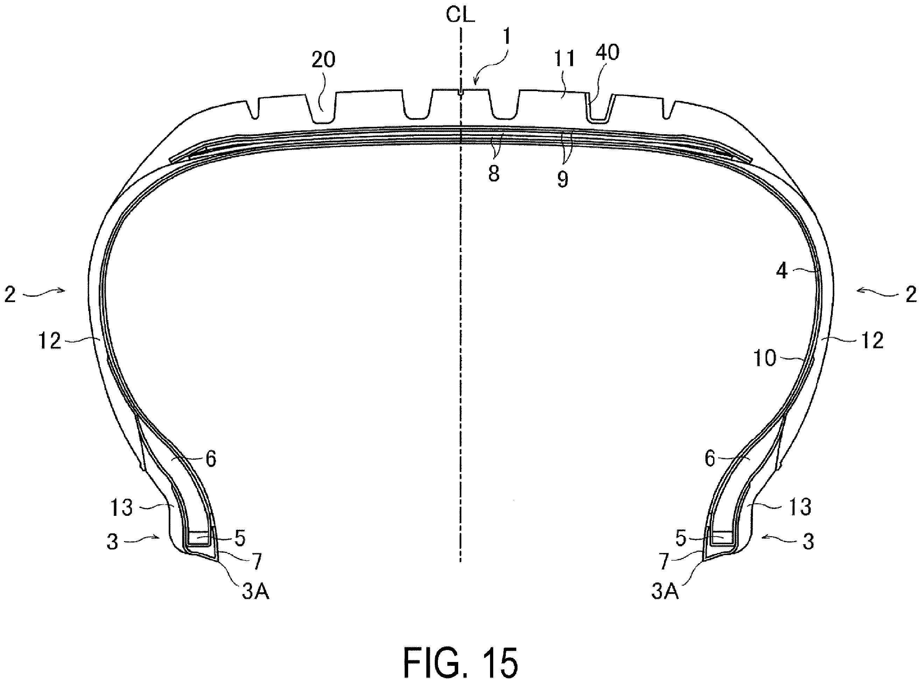

In the example of FIG. 15, the repellent layer 40 is configured by coating the chemical on the wall surface or the bottom surface of a groove 20 provided in the tread portion 1. In this case as well, instead of only coating the chemical, the chemical may be blended in a coating agent that is coated on the groove wall or the groove bottom for a variety of purposes. That is, a coating layer that covers the groove wall and the groove bottom for another purpose may also serve as the repellent layer 40. In the case that the repellent layer 40 is provided in the groove as described above, since the interior of the groove 20 is a location where the hands of workers are unlikely to touch during tire manufacturing, tire changing operations or the like, this is advantageous in preventing workers from being affected by the repellent layer 40 (the chemical). In this case, it is not necessary to provide the repellent layer 40 in all of the grooves, and the repellent layer 40 may be provided in a limited fashion in only a specific groove 20. In addition, an ordinary coating layer that does not include the chemical may be applied in the grooves 20 in which the repellent layer 40 is not provided.

It should be noted that the coating layer described above is provided, for example, to suppress the influence of ultraviolet rays or the like on the surface of the tire or to improve the cut resistance, and can be configured from a resin material including urethane resin, silicone resin, fluororesin, acrylic resin, melamine resin, or the like as a main component. In addition, depending on the purpose, a UV absorbent, a light stabilizer, or the like may be blended, for example. Even in cases in which the coating layer also serves as the repellent layer 40, the thickness of the coating layer may be set to the same level as the related art (for example, from 20 µm to 300 µm).

The placements of the repellent layer 40 in the third aspect of the invention described above may be utilized in combination. That is, two or more of the tread rubber layer 11, the side rubber layer 12, and the bead rubber layer 13 may also serve as the repellent layer 40. Further, in the case that any one of the tread rubber layer 11, the side rubber layer 12, or the bead rubber layer 13 also serves as the repellent layer 40, a coating layer that also serves as the repellent layer 40 may be used.

In the third aspect of the invention, in the case that the mounting direction of the pneumatic tire with respect to the vehicle is designated, the type of the repellent layer 40 may be made to differ between the side toward the inside of the vehicle (the vehicle inner side) when the tire is mounted on the vehicle and the side toward the outside of the vehicle (the vehicle outer side) when the tire is mounted on the vehicle. In particular, in the case that the repellent layer 40 is provided on the sidewall portion 2 of a pneumatic tire for which the mounting direction with respect to the vehicle is designated, it is preferable to provide a repellent layer 40 with respect to insect pests (mosquitoes) on the sidewall portion 2 on the vehicle outer side to repel or exterminate insect pests (mosquitoes) from around the vehicle approaching people getting in and out of the vehicle, while also providing a repellent layer 40 with respect to small animals (cats) on the sidewall portion 2 on the vehicle inner side to prevent small animals (cats) from getting under the vehicle. In this way, it is possible to efficiently achieve the effects of both types of the repellent layer 40.

It should be noted that in the above description of the third aspect of the invention, although mosquitoes, cats and the like were primarily described, other pests and small animals whose approach to the tire is undesirable can also be repelled or exterminated by the repellent layer 40 of the second aspect of the invention. In the case that other insect pests or small animals are targeted, it is preferable to set the chemical constituting the repellent layer 40, the arrangement of the repellent layer 40, and the conditions, under which the repellent layer 40 functions, in accordance with the ecology and habits of that insect pest or small animal.

### Examples

With regard to the first and second aspect of the inventions, 20 types of pneumatic tires including Conventional Example 1 and Examples 1 to 19 were produced. The tires had a tire size of 195/65R15 91H and the basic structure illustrated in FIG. 1, and were set to have the presence/absence of the anti-insect layer, the nature of the chemical constituting the anti-insect layer, the arrangement of the anti-insect layer, and the presence/absence of the protective layer as shown in Tables 1 and 2. In addition, with respect to the third aspect of the invention, seven types of pneumatic tires including Conventional Example 2 and Examples 20 to 25 were produced. The tires had a tire size of 195/65R15 91H and the basic structure illustrated in FIG. 10, and were set to have the presence/absence of the repellent layer, the installation method of the repellent layer, and the arrangement of the repellent layer as shown in Table 3.

It should be noted that, with regard to the "presence/absence of anti-insect layer" column in Tables 1 and 2, in the case that the anti-insect layer was not provided, "No" is shown, in the case that the chemical was coated on the inner surface of a vulcanized product tire, "Coated layer" is shown, in the case that a resin layer including the chemical was adhered, "Resin layer" is shown, in the case that the chemical is blended in the inner liner layer, "Inner liner layer" is shown, in the case that the chemical is blended in a mold release agent, "Mold release agent" is shown, in the case that the chemical was blended in a chafer, "Chafer" is shown, in the case that the chemical was blended in the adhesive rubber layer, "Adhesive rubber layer" is shown, and in the case that the chemical is blended in the inner liner layer but a protective rubber layer is provided on the inner surface side of the inner liner layer, "Inner liner layer (non-innermost surface)" is shown. In addition, with regard to the "arrangement of the anti-insect layer" column, the case that the anti-insect layer is locally provided at the belt end portion indicated by the symbol A in FIG. 1 is denoted as "Region A", and the case where the anti-insect layer is locally provided in the bead region indicated by the symbol B in FIG. 1 is denoted as "Region B". In addition, with regard to the "presence/absence of the protective layer" column, the case that the protective layer is not provided is denoted as "No", and the case that the protective layer is provided, its type (water-soluble microcapsule/water-soluble film/pressure-sensitive microcapsule) is shown.

With regard to the "installation method of the repellent layer" column of Table 3, the cases that the chemical was blended in the rubber composition that constitutes each part (the tread portion, the sidewall portion, and the bead portion) of the tire are denoted as "blended", and the cases that a coating agent including the chemical was coated are denoted as "coated". In addition, with regard to the "arrangement of the repellent layer" column, the name (tread, side, bead) of the portion in which the chemical was blended or the location (groove interior, side) where the coating agent including the chemical was coated is denoted. In addition, in the case that there is a corresponding diagram, the diagram number is additionally denoted.

These 20 types of pneumatic tires according to the first and the second aspect of the inventions were evaluated for repellent characteristics and extermination characteristics (extermination characteristics for adults and extermination characteristics for larvae) with respect to mosquitoes according to the evaluation method described below, and the results are shown in Tables 1 and 2.

### Repellent Characteristics

A test tire was placed in the center of a test room with an area of 33 m², and after wetting this test tire with water to form a water puddle in the tire, 25 mosquitoes (adults) were released in the room, and the distribution of mosquitoes was examined after 3 hours. If the number of mosquitoes within a radius of 1 m from the test tire is 0, this was evaluated as excellent, from 1 to 5 mosquitoes were evaluated as good, from 6 to 10 mosquitoes were evaluated as acceptable, and from 11 to 25 mosquitoes were evaluated as unacceptable.

Extermination Characteristics with respect to Adult Insects A test tire was placed in the center of a test room with an area of 33 m², and after wetting this test tire with water to form a water puddle in the tire, 25 egg-laden mosquitoes were released in the room, and the number of mosquitoes surviving after 2 days was counted. From 0 to 5 mosquitoes were evaluated as excellent, from 6 to 10 mosquitoes were evaluated as good, from 11 to 15 mosquitoes was evaluated as acceptable, and from 16 to 25 mosquitoes were evaluated as unacceptable.

Extermination Characteristics with respect to Larvae After wetting each test tire with water to form a water puddle in the tire, 20 mosquito larvae were placed in the water puddle, the number of mosquitoes that emerged by 15 days was examined, and the emergence rate was determined. A lower emergence rate indicates greater extermination characteristics with respect to larvae.

These seven types of tires according to the third aspect of the invention were evaluated for repellent characteristics with respect to mosquitoes according to the evaluation method described below, and the results are shown in Table 3.

### Repellent Characteristics

A test tire was placed in the center of a test room with an area of 33 m², 25 mosquitoes were released in this room, and the distribution of mosquitoes was examined after 3 hours. If the number of mosquitoes within a radius of 1 m from the test tire is 0, this was evaluated as excellent, from 1 to 5 mosquitoes was evaluated as good, from 6 to 10 mosquitoes was evaluated as acceptable, and from 11 to 25 mosquitoes was evaluated as unacceptable.

It should be noted that the evaluation of the repellent characteristics relating to the third aspect of the invention described above was carried out under the following four conditions, assuming that the test tire was in storage, used (when brand new), used (when worn), and after disposal. That is, in the case that the tire was assumed to be"in storage", a new test tire was placed in the test room without assembling the rim. In the case that the tire was assumed to be "used (when brand new)", the test tire evaluated for "in storage" was mounted on a wheel with a rim size of 15x6 J and placed in the test room described above. In the case that the tire was assumed to be "used (when worn)", after leaving the test tire evaluated for "used (when brand new)" for 90 days, the tread portion was worn down to a location of 50% of the effective groove depth from the tread surface, the tire was mounted on the wheel, and placed in the test room described above. In the case that the tire was assumed to be "after disposal", the test tire evaluated for "used (when worn)" was removed from the wheel and placed in the test room described above. Tables 1 and 2 show the evaluation results under each condition.

**[Table 1-1]**

| | Conventional Example 1 | Example 1 | Example 2 | Example 3 | Example 4 |
|---|---|---|---|---|---|
| Presence/absenc e of anti-insect layer | No | Coated layer | Coated layer | Coated layer | Coated layer |
| Nature of the chemical | - | Volatile | Water soluble | Water soluble | Water soluble |
| Arrangement of the anti-insect layer | - | Entire surface | Entire surface | A | A |
| Presence/absenc e of the protective layer | - | No | No | No | Water-soluble microcapsule s |
| Repellent Cha racteristics | Unacceptabl e | Excellent | Unacceptabl e | Unacceptabl e | Unacceptable |
| Extermination cha racteristics (with respect to adult insects) | Unacceptabl e | Excellent | Acceptable | Acceptable | Acceptable |
| Extermination cha racteristics (with respect to larvae) | 95% | 70% | 10% | 30% | 35% |

**[Table 1-2]**

| | Example 5 | Example 6 | Example 7 | Example 8 | Example 9 |
|---|---|---|---|---|---|
| Presence/absence of anti-insect layer | Coated layer | Coated layer | Coated layer | Resin layer | Resin layer |
| Nature of the chemical | Water soluble | Volatile | Volatile | Water soluble | Volatile |
| Arrangement of the anti-insect layer | A | B | B | A | B |
| Presence/absence of the protective layer | Water-soluble film | No | Pressure-sensitive microcapsules | No | No |
| Repellent Cha racteristics | Unacceptable | Excellent | Good | Unacceptable | Excellent |
| Extermination cha racteristics (with respect to adult insects) | Acceptable | Excellent | Good | Acceptable | Excellent |
| Extermination cha racteristics (with respect to larvae) | 35% | 65% | 75% | 30% | 80% |

**[Table 2-1]**

| | Example 10 | Example 11 | Example 12 | Example 13 | Example 14 |
|---|---|---|---|---|---|
| Presence/absence of anti-insect layer | Inner liner layer | Inner liner layer | Mold release agent | Mold release agent | Chafer |
| Nature of the chemical | Water soluble | Volatile | Water soluble | Volatile | Water soluble |
| Arrangement of the anti-insect layer | Entire surface | Entire surface | Entire surface | Entire surface | B |
| Presence/absence of the protective layer | No | No | No | No | No |
| Repellent Cha racteristics | Unacceptabl e | Acceptabl e | Unacceptabl e | Excellen t | Unacceptabl e |
| Extermination characteristics (with respect to adult insects) | Acceptable | Excellent | Acceptable | Excellen t | Acceptable |
| Extermination characteristics (with respect to larvae) | 25% | 75% | 10% | 70% | 25% |

**[Table 2-2]**

| | Example 15 | Example 16 | Example 17 | Example 18 | Example 19 |
|---|---|---|---|---|---|
| Presence/absence of anti-insect layer | Chafer | Adhesive rubber layer | Adhesive rubber layer | Inner liner layer (non-innermost surface) | Inner liner layer (non-innermost surface) |
| Nature of the chemical | Volatile | Water soluble | Volatile | Water soluble | Volatile |
| Arrangement of the anti-insect layer | B | Entire surface | Entire surface | Entire surface | Entire surface |
| Presence/absence of the protective layer | No | No | No | No | No |
| Repellent Cha racteristics | Good | Unacceptable | Acceptable | Unacceptable | Acceptable |
| Extermination characteristics (with respect to adult insects) | Excellent | Acceptable | Good | Acceptable | Good |
| Extermination characteristics (with respect to larvae) | 75% | 40% | 80% | 40% | 80% |

**[Table 3-1]**

| | | Conventional Example 2 | Example 20 | Example 21 |
|---|---|---|---|---|
| Presence/absence of the repellent layer | | No | Yes | Yes |
| Installation method of the repellent layer | | - | Blended | Blended |
| Arrangement of the repellent layer | | - | Tread (FIG. 10) | Side (FIG. 12) |
| Repellent Cha racteristics | In storage | Unacceptable | Excellent | Excellent |
| | Used (when brand new | Unacceptable | Good | Good |
| | Used (when worn) | Unacceptable | Acceptable | Good |
| | After disposal | Unacceptable | Unacceptable | Acceptable |

**[Table 3-2]**

| | | Example 22 | Example 23 | Example 24 | Example 25 |
|---|---|---|---|---|---|
| Presence/absence of the repellent layer | | Yes | Yes | Yes | Yes |
| Installation method of the repellent layer | | Blended | Coated | Coated | Blended |
| Arrangement of the repellent layer | | Bead (FIG. 13) | Side (FIG. 14) | Groove interior (FIG. 15) | Tread inner portion (FIG. 11) |
| Repellent Cha racteristics | In storage | Excellent | Excellent | Excellent | Unacceptable |
| | Used (when brand new) | Unacceptable | Good | Good | Unacceptable |
| | Used (when worn) | Unacceptable | Good | Acceptable | Excellent |
| | After disposal | Good | Acceptable | Acceptable | Good |

As is clear from Tables 1 and 2, with regard to the first and second aspect of the inventions, Examples 1, 6-7, 9, 11, 13, 15, 17, and 19 in which the chemical was volatile all displayed excellent results with respect to repellent characteristics and extermination characteristics for adult insects. In addition, Examples 2-5, 8, 10, 12, 14, 16, and 18 in which the chemical was water-soluble all displayed excellent results with respect to extermination characteristics for larvae.

As is clear from Table 3, with regard to the third aspect of the invention, in each of Examples 20-25 in which the repellent layer was provided, mosquitoes were effectively repelled. It should be noted that by changing the type of chemical used and conducting similar tests, the extermination characteristics with respect to insect pests (mosquitoes) and the repellent characteristics with respect to small animals (cats) were also verified.

### Reference Signs List

- 1: Tread portion
- 2: Sidewall portion
- 3: Bead portion
- 4: Carcass layer
- 5: Bead core
- 6: Bead filler
- 7: Chafer
- 8: Belt layer
- 9: Belt reinforcing layer
- 10: Inner liner layer
- 11: Tread rubber layer
- 12: Side rubber layer
- 13: Bead rubber layer (Rim cushion rubber layer)
- 20: Groove
- 30: Anti-insect layer
- 40: Repellent layer
- CL: Tire equator

## Claims

1. A pneumatic tire comprising:
a tread portion (1) that extends in a tire circumferential direction and forms an annular shape;
a pair of sidewall portions (2) disposed on both sides of the tread portion (1); and
a pair of bead portions (3) disposed on an inner side in a tire radial direction of the sidewall portions (2),
wherein an anti-insect layer (30) having extermination characteristics or repellent characteristics with respect to insect pests is provided on an innermost surface of the pneumatic tire,
**characterized in that** the anti-insect layer (30) is any element of a resin layer disposed on an inner surface of the pneumatic tire,
a mold release agent coated on an inner surface of the pneumatic tire,
an inner liner layer (10) constituting an innermost layer of the pneumatic tire, or
a chafer (7, 7') in which at least a portion thereof is exposed on an inner circumferential surface of the pneumatic tire,
and **in that** a chemical having extermination characteristics or repellent characteristics with respect to insect pests is mixed or blended with a rubber composition, resin or a compound constituting the element.

2. The pneumatic tire according to claim 1, wherein:
at least a portion of the anti-insect layer (30) is covered with a water-soluble protective film.

3. The pneumatic tire according to claim 1, wherein:
the chemical is encapsulated in water-soluble microcapsules (32).

4. The pneumatic tire according to claim 1, wherein:
the chemical is encapsulated in pressure-sensitive microcapsules (32).

5. The pneumatic tire according to any one of claims 1 to 4, wherein:
the chemical is water-soluble, and the anti-insect layer is locally provided at a belt end region (A) on an inner surface of the pneumatic tire.

6. The pneumatic tire according to any one of claims 1 to 4, wherein:
the chemical is volatile, and the anti-insect layer is locally provided at a bead region (B) on an inner surface of the pneumatic tire.

7. A pneumatic tire comprising:
a tread portion (1) that extends in a tire circumferential direction and forms an annular shape;
a pair of sidewall portions (2) disposed on both sides of the tread portion (1); and
a pair of bead portions (3) disposed on an inner side in a tire radial direction of the sidewall portions (2),
wherein an anti-insect layer (30) having extermination characteristics or repellent characteristics with respect to insect pests is provided,
**characterized in that** the anti-insect layer (30) is provided at locations adjacent to a rubber layer or a resin layer constituting an innermost surface of the pneumatic tire, and **in that**
the anti-insect layer (30) is an adhesive rubber layer layered between an inner liner layer (10) and a carcass layer (4) constituting an innermost layer of the pneumatic tire, and a chemical having extermination characteristics or repellent characteristics with respect to insect pests is mixed or blended in a rubber composition constituting the adhesive rubber layer.

8. A pneumatic tire comprising:
a tread portion (1) that extends in a tire circumferential direction and forms an annular shape;
a pair of sidewall portions (2) disposed on both sides of the tread portion (1); and
a pair of bead portions (3) disposed on an inner side in a tire radial direction of the sidewall portions (2),
wherein an anti-insect layer (30) having extermination characteristics or repellent characteristics with respect to insect pests is provided,
**characterized in that** the anti-insect layer (30) is provided at locations adjacent to a rubber layer or a resin layer constituting an innermost surface of the pneumatic tire, and **in that**
a protective layer is provided on an inner surface side of an inner liner layer (10), a rubber layer or a resin layer constituting the innermost surface of the pneumatic tire is the protective layer, the anti-insect layer is the inner liner layer, and a chemical having extermination characteristics or repellent characteristics with respect to insect pests is mixed or blended with a rubber composition or resin constituting the inner liner layer.

9. The pneumatic tire according to claim 7 or claim 8, wherein:
the chemical includes, as a main component, a pyrethroid insecticide, an organic phosphorus insecticide, DEET, icaridin, aroma oil, wood vinegar powder, diflubenzuron, neonicotinoid, etofenprox, or a compound including copper.

10. A pneumatic tire comprising:
a tread portion (1) that extends in a tire circumferential direction and forms an annular shape;
a pair of sidewall portions (2) disposed on both sides of the tread portion (1); and
a pair of bead portions (3) disposed on an inner side in a tire radial direction of the sidewall portions (2),
wherein a repellent layer (40) having repellent characteristics or extermination characteristics with respect to insect pests or small animals is provided on an outer surface of the pneumatic tire,
**characterized in that** the repellent layer (40) is a bead rubber layer (13) constituting the bead portions (3), and a chemical having repellent characteristics or extermination characteristics with respect to insect pests or small animals is blended in a rubber composition constituting the bead rubber layer.

11. A pneumatic tire comprising:
a tread portion (1) that extends in a tire circumferential direction and forms an annular shape;
a pair of sidewall portions (2) disposed on both sides of the tread portion (1); and
a pair of bead portions (3) disposed on an inner side in a tire radial direction of the sidewall portions (2),
wherein a repellent layer (40) having repellent characteristics or extermination characteristics with respect to insect pests or small animals is provided on an outer surface of the pneumatic tire,
**characterized in that** the repellent layer (40) is a layer formed from a chemical having repellent characteristics or extermination characteristics with respect to insect pests or small animals, and coated on an outer surface of the sidewall portions (2).

12. A pneumatic tire comprising:
a tread portion (1) that extends in a tire circumferential direction and forms an annular shape;
a pair of sidewall portions (2) disposed on both sides of the tread portion (1); and
a pair of bead portions (3) disposed on an inner side in a tire radial direction of the sidewall portions (2),
wherein a repellent layer (40) having repellent characteristics or extermination characteristics with respect to insect pests or small animals is provided on an outer surface of the pneumatic tire,
**characterized in that** the repellent layer (40) is a layer formed from a chemical having repellent characteristics or extermination characteristics with respect to insect pests or small animals, and coated on a wall surface or a bottom surface of a groove provided in the tread portion (1).

13. The pneumatic tire according to any one of claim 10 to 12, wherein:
the chemical includes, as a main component, a pyrethroid insecticide, an organophosphorus insecticide, DEET, icaridin, aroma oil, wood vinegar powder, diflubenzuron, neonicotinoid, etofenprox, a compound including copper, or methyl salicylate, ethyl salicylate, cinnamic aldehyde, isotridecyl alcohol, limonene, a fragrance, an extract component of a natural herb, or animal urine.

## Patentansprüche

1. Luftreifen, umfassend:
einen Laufflächenabschnitt (1), der sich in Reifenumfangsrichtung erstreckt und eine Ringform bildet;
ein Paar von Seitenwandabschnitten (2), die auf beiden Seiten des Laufflächenabschnitts (1) angeordnet sind; und
ein Paar von Wulstabschnitten (3), die auf einer Innenseite in Reifenradialrichtung der Seitenwandabschnitte (2) angeordnet sind,
wobei eine Insektenschutzschicht (30) mit Vernichtungseigenschaften oder Abwehreigenschaften in Bezug auf Insektenschädlinge auf einer innersten Oberfläche des Luftreifens bereitgestellt ist,
**dadurch gekennzeichnet, dass** die Insektenschutzschicht (30) ein beliebiges Element einer Harzschicht, die auf einer Innenoberfläche des Luftreifens angeordnet ist,
eines Formtrennmittels, das auf einer Innenoberfläche des Luftreifens beschichtet ist, einer Innenseelenschicht (10), die eine innerste Schicht des Luftreifens bildet, oder
eines Wulstschutzstreifens (7, 7') ist, bei dem zumindest ein Abschnitt davon auf einer Innenumfangsoberfläche des Luftreifens freiliegt,
und **dadurch, dass** eine Chemikalie mit Vernichtungseigenschaften oder Abwehreigenschaften in Bezug auf Insektenschädlinge mit einer Kautschuk- bzw. Gummizusammensetzung, einem Harz oder einer Verbindung, die das Element bildet, gemischt oder vermischt wird.

2. Luftreifen gemäß Anspruch 1, wobei:
zumindest ein Abschnitt der Insektenschutzschicht (30) mit einer wasserlöslichen Schutzfolie bedeckt ist.

3. Luftreifen gemäß Anspruch 1, wobei:
die Chemikalie in wasserlöslichen Mikrokapseln (32) eingekapselt ist.

4. Luftreifen gemäß Anspruch 1, wobei:
die Chemikalie in druckempfindlichen Mikrokapseln (32) eingekapselt ist.

5. Luftreifen gemäß einem der Ansprüche 1 bis 4, wobei: die Chemikalie wasserlöslich ist und die Insektenschutzschicht lokal an einem Gürtelendbereich (A) auf einer Innenoberfläche des Luftreifens bereitgestellt ist.

6. Luftreifen gemäß einem der Ansprüche 1 bis 4, wobei: die Chemikalie flüchtig ist und die Insektenschutzschicht lokal an einem Wulstbereich (B) auf einer Innenoberfläche des Luftreifens bereitgestellt ist.

7. Luftreifen, umfassend:
einen Laufflächenabschnitt (1), der sich in Reifenumfangsrichtung erstreckt und eine Ringform bildet;
ein Paar von Seitenwandabschnitten (2), die auf beiden Seiten des Laufflächenabschnitts (1) angeordnet sind; und
ein Paar von Wulstabschnitten (3), die auf einer Innenseite in Reifenradialrichtung der Seitenwandabschnitte (2) angeordnet sind,
wobei eine Insektenschutzschicht (30) mit Vernichtungseigenschaften oder Abwehreigenschaften in Bezug auf Insektenschädlinge bereitgestellt ist, **dadurch gekennzeichnet, dass** die Insektenschutzschicht (30) an Stellen bereitgestellt ist, die an eine Gummischicht oder eine Harzschicht angrenzen, die eine innerste Oberfläche des Luftreifens bilden, und **dadurch, dass** die Insektenschutzschicht (30) eine klebende Gummischicht ist, die zwischen einer Innenseelenschicht (10) und einer Karkassenschicht (4), die eine innerste Schicht des Luftreifens bilden, geschichtet ist, und eine Chemikalie mit Vernichtungseigenschaften oder Abwehreigenschaften in Bezug auf Insektenschädlinge in eine Kautschuk- bzw. Gummizusammensetzung, die die klebende Gummischicht bildet, gemischt oder vermischt wird.

8. Luftreifen, umfassend:
einen Laufflächenabschnitt (1), der sich in Reifenumfangsrichtung erstreckt und eine Ringform bildet;
ein Paar von Seitenwandabschnitten (2), die auf beiden Seiten des Laufflächenabschnitts (1) angeordnet sind; und
ein Paar von Wulstabschnitten (3), die auf einer Innenseite in Reifenradialrichtung der Seitenwandabschnitte (2) angeordnet sind,
wobei eine Insektenschutzschicht (30) mit Vernichtungseigenschaften oder Abwehreigenschaften in Bezug auf Insektenschädlinge bereitgestellt ist, **dadurch gekennzeichnet, dass** die Insektenschutzschicht (30) an Stellen bereitgestellt ist, die an eine Gummischicht oder eine Harzschicht angrenzen, die eine innerste Oberfläche des Luftreifens bilden, und **dadurch, dass** eine Schutzschicht auf einer Innenoberflächenseite einer Innenseelenschicht (10) bereitgestellt ist, eine Gummischicht oder eine Harzschicht, die die innerste Oberfläche des Luftreifens bilden, die Schutzschicht ist, die Insektenschutzschicht die Innenseelenschicht ist, und eine Chemikalie mit Vernichtungseigenschaften oder Abwehreigenschaften in Bezug auf Insektenschädlinge mit einer Kautschuk- bzw. Gummizusammensetzung oder einem Harz, die bzw. das die Innenseelenschicht bildet, gemischt oder vermischt wird.

9. Luftreifen gemäß Anspruch 7 oder Anspruch 8, wobei:
die Chemikalie als einen Hauptbestandteil ein Pyrethroidinsektizid, ein organisches Phosphorinsektizid, DEET, Icaridin, Aromaöl, Holzessigpulver, Diflubenzuron, Neonicotinoid, Etofenprox oder eine Verbindung, die Kupfer einschließt, einschließt.

10. Luftreifen, umfassend:
einen Laufflächenabschnitt (1), der sich in Reifenumfangsrichtung erstreckt und eine Ringform bildet;
ein Paar von Seitenwandabschnitten (2), die auf beiden Seiten des Laufflächenabschnitts (1) angeordnet sind; und
ein Paar von Wulstabschnitten (3), die auf einer Innenseite in Reifenradialrichtung der Seitenwandabschnitte (2) angeordnet sind,
wobei eine Abwehrschicht (40) mit Abwehreigenschaften oder Vernichtungseigenschaften in Bezug auf Insektenschädlinge oder Kleintiere auf einer Außenoberfläche des Luftreifens bereitgestellt ist,
**dadurch gekennzeichnet, dass** die Abwehrschicht (40) eine Wulstgummischicht (13) ist, die Wulstabschnitte (3) bildet, und eine Chemikalie mit Abwehreigenschaften oder Vernichtungseigenschaften in Bezug auf Insektenschädlinge oder Kleintiere in einer Kautschuk- bzw. Gummizusammensetzung vermischt ist, die die Wulstgummischicht bildet.

11. Luftreifen, umfassend:
einen Laufflächenabschnitt (1), der sich in Reifenumfangsrichtung erstreckt und eine Ringform bildet;
ein Paar von Seitenwandabschnitten (2), die auf beiden Seiten des Laufflächenabschnitts (1) angeordnet sind; und
ein Paar von Wulstabschnitten (3), die auf einer Innenseite in Reifenradialrichtung der Seitenwandabschnitte (2) angeordnet sind,
wobei eine Abwehrschicht (40) mit Abwehreigenschaften oder Vernichtungseigenschaften in Bezug auf Insektenschädlinge oder Kleintiere auf einer Außenoberfläche des Luftreifens bereitgestellt ist,
**dadurch gekennzeichnet, dass** die Abwehrschicht (40) eine Schicht ist, die aus einer Chemikalie gebildet ist, die Abwehreigenschaften oder Vernichtungseigenschaften in Bezug auf Insektenschädlinge oder Kleintiere aufweist und auf einer Außenoberfläche der Seitenwandabschnitte (2) beschichtet ist.

12. Luftreifen, umfassend:
einen Laufflächenabschnitt (1), der sich in Reifenumfangsrichtung erstreckt und eine Ringform bildet;
ein Paar von Seitenwandabschnitten (2), die auf beiden Seiten des Laufflächenabschnitts (1) angeordnet sind; und
ein Paar von Wulstabschnitten (3), die auf einer Innenseite in Reifenradialrichtung der Seitenwandabschnitte (2) angeordnet sind,
wobei eine Abwehrschicht (40) mit Abwehreigenschaften oder Vernichtungseigenschaften in Bezug auf Insektenschädlinge oder Kleintiere auf einer Außenoberfläche des Luftreifens bereitgestellt ist,
**dadurch gekennzeichnet, dass** die Abwehrschicht (40) eine Schicht ist, die aus einer Chemikalie gebildet ist, die Abwehreigenschaften oder Vernichtungseigenschaften in Bezug auf Insektenschädlinge oder Kleintiere aufweist und auf einer Wandoberfläche oder einer Bodenoberfläche einer Rille, die in dem Laufflächenabschnitt (1) bereitgestellt ist, beschichtet ist.

13. Luftreifen gemäß einem der Ansprüche 10 bis 12, wobei: die Chemikalie als einen Hauptbestandteil ein Pyrethroidinsektizid, ein Organophosphorinsektizid, DEET, Icaridin, Aromaöl, Holzessigpulver, Diflubenzuron, Neonicotinoid, Etofenprox, eine Verbindung, die Kupfer einschließt, oder Methylsalicylat, Ethylsalicylat, Zimtaldehyd, Isotridecylalkohol, Limonen, einen Duftstoff, einen Extraktbestandteil eines natürlichen Krauts oder tierisches Urin einschließt.

## Revendications

1. Pneumatique comprenant :
une partie de bande de roulement (1) qui s'étend dans une direction circonférentielle du pneu et qui présente une forme annulaire ;
une paire de parties de flanc (2) disposées de part et d'autre de la partie de bande de roulement (1) ; et
une paire de parties de talon (3) disposées sur un côté interne dans une direction radiale du pneu des parties de flanc (2),
dans lequel une couche anti-insectes (30) ayant des caractéristiques d'extermination ou des caractéristiques répulsives vis-à-vis des insectes nuisibles est fournie sur une surface la plus interne du pneumatique,
**caractérisé en ce que** la couche anti-insectes (30) est un élément quelconque d'une couche de résine disposée sur une surface interne du pneumatique,
d'un agent de démoulage appliqué sur une surface interne du pneumatique, d'une couche de revêtement interne (10) constituant une couche la plus interne du pneumatique ou
d'une bandelette talon (7, 7') dans laquelle au moins une partie de celle-ci est exposée sur une surface circonférentielle interne du pneumatique,
et **en ce qu'**un produit chimique ayant des caractéristiques d'extermination ou des caractéristiques répulsives vis-à-vis des insectes nuisibles est mélangé ou mixé avec une composition de caoutchouc, une résine ou un composé constituant l'élément.

2. Pneumatique selon la revendication 1, dans lequel :
au moins une partie de la couche anti-insectes (30) est recouverte d'un film protecteur hydrosoluble.

3. Pneumatique selon la revendication 1, dans lequel :
le produit chimique est encapsulé dans des micro-capsules hydrosolubles (32).

4. Pneumatique selon la revendication 1, dans lequel :
le produit chimique est encapsulé dans des micro-capsules sensibles à la pression (32).

5. Pneumatique selon l'une quelconque des revendications 1 à 4, dans lequel : le produit chimique est hydrosoluble, et la couche anti-insectes est fournie localement au niveau d'une région d'extrémité de ceinture (A) sur une surface interne du pneumatique.

6. Pneumatique selon l'une quelconque des revendications 1 à 4, dans lequel : le produit chimique est volatil, et la couche anti-insectes est fournie localement au niveau d'une région de talon (B) sur une surface interne du pneumatique.

7. Pneumatique comprenant :
une partie de bande de roulement (1) qui s'étend dans une direction circonférentielle du pneu et qui présente une forme annulaire ;
une paire de parties de flanc (2) disposées de part et d'autre de la partie de bande de roulement (1) ; et
une paire de parties de talon (3) disposées sur un côté interne dans une direction radiale du pneu des parties de flanc (2),
dans lequel une couche anti-insectes (30) ayant des caractéristiques d'extermination ou des caractéristiques répulsives vis-à-vis des insectes nuisibles est fournie, **caractérisé en ce que** la couche anti-insectes (30) est fournie à des emplacements adjacents à une couche de caoutchouc ou à une couche de résine constituant une surface la plus interne du pneumatique, et **en ce que**
la couche anti-insectes (30) est une couche de caoutchouc adhésive stratifiée entre une couche de revêtement interne (10) et une couche de carcasse (4) constituant une couche la plus interne du pneumatique, et un produit chimique ayant des caractéristiques d'extermination ou des caractéristiques répulsives vis-à-vis des insectes nuisibles est mélangé ou mixé dans une composition de caoutchouc constituant la couche de caoutchouc adhésive.

8. Pneumatique comprenant :
une partie de bande de roulement (1) qui s'étend dans une direction circonférentielle du pneu et qui présente une forme annulaire ;
une paire de parties de flanc (2) disposées de part et d'autre de la partie de bande de roulement (1) ; et
une paire de parties de talon (3) disposées sur un côté interne dans une direction radiale du pneu des parties de flanc (2),
dans lequel une couche anti-insectes (30) ayant des caractéristiques d'extermination ou des caractéristiques répulsives vis-à-vis des insectes nuisibles est fournie,
**caractérisé en ce que** la couche anti-insectes (30) est fournie à des emplacements adjacents à une couche de caoutchouc ou à une couche de résine constituant une surface la plus interne du pneumatique, et **en ce que**
une couche de protection est appliquée sur un côté de surface interne d'une couche de revêtement interne (10), une couche de caoutchouc ou une couche de résine constituant la surface la plus interne du pneumatique est la couche de protection, la couche anti-insectes est la couche de revêtement interne, et un produit chimique ayant des caractéristiques d'extermination ou des caractéristiques répulsives vis-à-vis des insectes nuisibles est mélangé ou mixé avec une composition de caoutchouc ou une résine constituant la couche de revêtement interne.

9. Pneumatique selon la revendication 7 ou 8, dans lequel :
le produit chimique inclut, en tant que composant principal, un insecticide pyréthroïde, un insecticide organique au phosphore, du DEET, de l'icaridine, de l'huile aromatique, de la poudre de vinaigre de bois, du diflubenzuron, du néonicotinoïde, de l'étofenprox, ou un composé incluant du cuivre.

10. Pneumatique comprenant :
une partie de bande de roulement (1) qui s'étend dans une direction circonférentielle du pneu et qui présente une forme annulaire ;
une paire de parties de flanc (2) disposées de part et d'autre de la partie de bande de roulement (1) ; et
une paire de parties de talon (3) disposées sur un côté interne dans une direction radiale du pneu des parties de flanc (2),
dans lequel une couche répulsive (40) ayant des caractéristiques répulsives ou des caractéristiques d'extermination vis-à-vis des insectes nuisibles ou des petits animaux est fournie sur une surface externe du pneumatique,
**caractérisé en ce que** la couche répulsive (40) est une couche de caoutchouc de talon (13) constituant les parties de talon (3), et un produit chimique ayant des caractéristiques répulsives ou des caractéristiques d'extermination vis-à-vis des insectes nuisibles ou des petits animaux est mélangé dans une composition de caoutchouc constituant la couche de caoutchouc de talon.

11. Pneumatique comprenant :
une partie de bande de roulement (1) qui s'étend dans une direction circonférentielle du pneu et qui présente une forme annulaire ;
une paire de parties de flanc (2) disposées de part et d'autre de la partie de bande de roulement (1) ; et
une paire de parties de talon (3) disposées sur un côté interne dans une direction radiale du pneu des parties de flanc (2),
dans lequel une couche répulsive (40) ayant des caractéristiques répulsives ou des caractéristiques d'extermination vis-à-vis des insectes nuisibles ou des petits animaux est fournie sur une surface externe du pneumatique,
**caractérisé en ce que** la couche répulsive (40) est une couche formée à partir d'un produit chimique ayant des caractéristiques répulsives ou des caractéristiques d'extermination vis-à-vis des insectes nuisibles ou des petits animaux, et revêtue sur une surface externe des parties de flanc (2).

12. Pneumatique comprenant :
une partie de bande de roulement (1) qui s'étend dans une direction circonférentielle du pneu et qui présente une forme annulaire ;
une paire de parties de flanc (2) disposées de part et d'autre de la partie de bande de roulement (1) ; et
une paire de parties de talon (3) disposées sur un côté interne dans une direction radiale du pneu des parties de flanc (2),
dans lequel une couche répulsive (40) ayant des caractéristiques répulsives ou des caractéristiques d'extermination vis-à-vis des insectes nuisibles ou des petits animaux est fournie sur une surface externe du pneumatique,
**caractérisé en ce que** la couche répulsive (40) est une couche formée à partir d'un produit chimique ayant des caractéristiques répulsives ou des caractéristiques d'extermination vis-à-vis des insectes nuisibles ou des petits animaux, et revêtue sur une surface de paroi ou une surface inférieure d'une rainure fournie dans la partie de bande de roulement (1).

13. Pneumatique selon l'une quelconque des revendications 10 à 12, dans lequel : le produit chimique inclut, en tant que composant principal, un insecticide pyréthroïde, un insecticide organophosphoré, du DEET, de l'icaridine, de l'huile aromatique, de la poudre de vinaigre de bois, du diflubenzuron, du néonicotinoïde, de l'étofenprox, un composé incluant du cuivre, ou du salicylate de méthyle, du salicylate d'éthyle, de l'aldéhyde cinnamique, de l'alcool isotridécylique, du limonène, un parfum, un composant d'extrait d'une herbe naturelle, ou de l'urine d'un animal.
